(19)

Europäisches
Patentamt
European
Patent Office
Office européen
des brevets

(11) **EP 1 968 914 B1**

(12) **EUROPEAN PATENT SPECIFICATION**

(45) Date of publication and mention
of the grant of the patent:
**21.07.2010 Bulletin 2010/29**

(51) Int Cl.:
**C04B 41/85** (2006.01)   **C04B 41/89** (2006.01)
**F16D 69/02** (2006.01)

(21) Application number: **06837063.4**

(86) International application number:
**PCT/US2006/043343**

(22) Date of filing: **08.11.2006**

(87) International publication number:
**WO 2007/078419 (12.07.2007 Gazette 2007/28)**

(54) **OXIDATION INHIBITION OF CARBON-CARBON COMPOSITES**

OXIDATIONSINHIBIERUNG VON KOHLENSTOFF-KOHLENSTOFF-VERBUNDWERKSTOFFEN

INHIBITION DE L'OXYDATION DE COMPOSITES CARBONE/CARBONE

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2005 US 315592**

(43) Date of publication of application:
**17.09.2008 Bulletin 2008/38**

(73) Proprietor: **Goodrich Corporation
Charlotte,
North Carolina 28217 (US)**

(72) Inventors:
• **MAZANY, Anthony, M.
Amelia Island, Florida 32034 (US)**
• **BIANCO, Robert
Strongsville, Ohio 44136 (US)**
• **GRISIK, John Joseph
Penninsula, Ohio 44264 (US)**

• **LAU, S. K.
Broadview Heights, Ohio 44147 (US)**
• **CIRILO, Hector
Avon, Ohio 44011 (US)**

(74) Representative: **von Kreisler Selting Werner
Deichmannhaus am Dom
Bahnhofsvorplatz 1
50667 Köln (DE)**

(56) References cited:
**US-A1- 2003 143 436    US-A1- 2004 038 032
US-A1- 2005 022 698**

• **CHEMICAL ABSTRACTS, vol. 114, no. 22, 3 June 1991 (1991-06-03), Columbus, Ohio, US; abstract no.: 212771z, XP000191602 & CN 1 046 517 A (FAMING ZHUANLI SHENQING GONGKAI SHUOMINGSHU) 31 October 1990 (1990-10-31)**

**Description**

## TECHNICAL FIELD

This invention relates to a method of inhibiting the oxidation of carbon-carbon composites.

## BACKGROUND

Many aircraft braking systems employ carbon-carbon composite discs. These discs are required to absorb large amounts of kinetic energy when stopping an aircraft during landing. During these stops, the carbon-carbon composite discs are often heated to sufficiently high temperatures such that the parts of the disc exposed to air tend to oxidize. These composites are typically porous. The porosities often range from 5% to 10% by volume. The open pores allow air, moisture and contaminates to infiltrate into the carbon-carbon composite. At the elevated temperatures reached during use, the infiltrate materials often contribute to the internal oxidation of the carbon-carbon composite. Internal oxidation tends to weaken the composite, especially in and around the brake rotor lugs and stator slots which transmit torque during braking.

One method of minimizing loss of strength and structural integrity of the carbon-carbon composites is to apply phosphoric acid to non-wear surfaces of the composites, followed by baking at 650°C. Such treatment with phosphoric acid based compositions is disclosed in US 2004/0038032 and US 2003/0143436.

Another method is to coat the carbon-carbon composite with a barrier layer. Barrier layers that have been used include silicon-based coatings, such as silicon carbide..The barrier layers are employed to reduce the inflow of air, and thereby inhibit oxidation of the carbon-carbon composites. However, these barrier layers often crack and tend to be porous. These cracks and pores allow air to infiltrate the carbon-carbon composite despite the presence of the barrier layer.

In the past some commercial transport brakes have suffered crushing in the lugs or stator slots. The damage has been associated generally with oxidation of the carbon-carbon composite at elevated temperatures. This includes damage caused by the oxidation enlargement of cracks around fibers, and enlargement of cracks in barrier coatings that have been applied to the carbon-carbon composites. The enlargement effect has occurred at depths of up to 12.5 millimeters (mm) (0.5 inch) beneath exposed surfaces.

Contaminates identified in severely oxidized regions include potassium and sodium. These contaminates are believed to catalyze carbon oxidation and thus may be considered to be oxidation catalysts. These contaminates may come into contact with the carbon-carbon composite during cleaning and/or de-icing procedures used on aircraft. These procedures often use cleaning or de-icing materials that include sodium or potassium. Other sources of sodium include salt deposits left from seawater or sea spray. These contaminates can penetrate the pores of the carbon-carbon composites used in aircraft brakes, leaving catalytic deposits within the pores. When such contamination occurs, the rate of carbon loss by such catalyzed oxidation can, for example, increase by one to two orders of magnitude. Catalytic oxidation may also be promoted by metal species other than potassium and sodium such as iron, calcium, vanadium and similar metal species.

A problem presented by the prior art relates to producing a carbon-carbon composite having enhanced resistance to normal oxidation as well as catalyzed oxidation. This invention provides a solution to this problem.

## SUMMARY

The invention relates to a method and a composition for treating a carbon-carbon composite with an oxidation inhibiting composition. In one embodiment, the method optionally further comprises pretreating the composite with a pretreating composition prior to application of the oxidation inhibiting composition.

In one embodiment, the invention relates to a method of inhibiting oxidation of a carbon-carbon composite, comprising: (A) applying an oxidation inhibiting composition to a surface of the carbon-carbon composite, the oxidation inhibiting composition comprising at least one phosphate glass; and (B) heating the carbon-carbon composite from step (A) at a sufficient temperature to adhere the phosphate glass to the carbon-carbon composite.

In one embodiment, a pretreating composition is applied to the surface of the carbon-carbon composite prior to step (A), the pretreating composition comprising phosphoric acid and/or at least one acid phosphate salt, at least one aluminum salt, and optionally at least one additional metal salt, the carbon-carbon composite being porous, the pretreating composition penetrating at least some of the pores of the carbon-carbon composite.

In one embodiment, a barrier coating may be applied prior to or subsequent to the application of the oxidation inhibiting composition and/or pretreating composition.

In one embodiment, the invention relates to a method of inhibiting oxidation of a porous carbon-carbon composite, comprising: applying a pretreating composition to the surface of the carbon-carbon composite, the pretreating composition comprising phosphoric acid and/or at least one acid phosphate salt, at least one aluminum salt, and at optionally least one additional metal salt, and drying the pretreating composition; applying an oxidation inhibiting composition to the surface of the carbon-carbon composite over the pretreating composition, the oxidation inhibiting composition comprising at least one phosphate glass; and heating the carbon-carbon composite at a sufficient temperature to adhere the phosphate glass to the carbon-carbon composite.

The composition used in the method of the invention comprises at least one phosphate glass and at least one carrier liquid. In one embodiment, the composition further comprises at least one ammonium phosphate. In one embodiment, the composition further comprises at least one ammonium phosphate, at least one metal phosphate, or a mixture thereof. In one embodiment, the composition further comprises at least one refractory compound. In one embodiment, the composition further comprises at least one wetting agent. In one embodiment, the phosphate glass is a borophosphate glass.

Preferred embodiments of the invention are apparent from the dependent claims.

## BRIEF DESCRIPTION OF THE DRAWINGS

Fig. 1 is an optical micrograph at a magnification of 200X of the carbon-carbon composite treated in Example 85 wherein deposits from a pretreating composition (phosphate undercoating) are in the pores of the carbon-carbon composite and underlying a phosphate glass layer (glass barrier).

Fig. 2 is an SEM micrograph at a magnification of 500X of the carbon-carbon composite treated in Example 85.

## DETAILED DESCRIPTION

The term "carbon-carbon composite" refers to a structure made from carbon fibers or carbon-containing fibers.

The terms "inhibition" and "passivation" refer to the reduction or elimination of the oxidative effect of oxygen that is present, or a reduction in the ability of catalytic material to affect oxidation rates. "Barrier" and "barrier layer" refer to a structure that reduces or eliminates the presence of oxidative materials. "Impregnation", "penetration" and "infiltration" refer to the action by which material may enter pores or voids. "Retention" refers to the reduction or elimination of the migration of a material out of pores and onto a surface. "Frit" and "glass frit" refer to fused or partially fused materials useful in making glass coatings or layers.

The term "phosphate glass" refers to a glass composition containing $P_2O_5$ or a precursor thereof. The concentration of $P_2O_5$ or precursor in the phosphate glass may be at least 20 mol %, and in one embodiment from 20 to 80 mol %.

The term "borophosphate glass" refers to a glass composition containing $B_2O_3$ and $P_2O_5$ or precursors thereof. The concentration of the $B_2O_3$ or precursor thereof may be at least 1 mol %, and in one embodiment from 1 to 15 mol %. The concentration of the $P_2O_5$ or precursor thereof may be at least 20 mol %, and in one embodiment from 20 to 80 mol %.

### Carbon-Carbon Composite:

The carbon-carbon composite that may be treated in accordance with the present invention may be any carbon-carbon composite. These composites may be porous structures. The carbon-carbon composite may be prepared from carbon preforms. Carbon preforms may be made of carbon fibers, which may be formed from oxidized polyacrylonitrile resin. In one embodiment, these fibers can be layered together to form a shape, such as a disc for use in an aircraft braking system. The shape is heated and infiltrated with a pyrolyzable carbon source, such as methane, to form the carbon-carbon composite. The carbon-carbon composite may have a bulk density in the range from 1.5 g/cm$^3$ to 2 g/cm$^3$.

In one embodiment, the carbon-carbon composite may contain one or more catalytic materials in its pores which increase the rate of oxidation of such composites. These catalytic materials may be in the form of contaminants introduced during or after manufacture. The catalytic materials may include calcium, sodium, potassium, copper, iron, vanadium, and the like. The catalytic materials may also include other metals or materials encountered during service (e.g., ozone), organic materials, and the like.

In one embodiment, the carbon-carbon composite may be heat treated prior to application of the oxidation inhibiting composition, the pretreating composition or the barrier coating. The heat treatment may be conducted for a period in the range from 0.1 hour to 24 hours, at a temperature in the range from 50 to 300°C.

### Barrier Coating:

In one embodiment, a barrier coating may be applied to at least one surface of the carbon-carbon composite prior to or subsequent to treatment with the oxidation inhibiting composition and/or pretreating composition pursuant to the inventive method. The barrier coating materials that may be used include carbides or nitrides including boron nitride, silicon carbide, titanium carbide, boron carbide, silicon oxycarbide, silicon nitride, and mixtures of two or more thereof. In one embodiment, the barrier coating material may comprise ZYP COATING (grade SC), available from ZYP Coatings, Inc., Oak Ridge, TN.

The barrier coating may be applied to the carbon-carbon composite using any suitable method, including chemical vapor deposition (CVD), painting, spraying, molten application, and the like. In one embodiment, the barrier coating may comprise silicon carbide applied using CVD. The barrier coating may be baked at a temperature of about 650°C, either before or after the carbon-carbon composite is treated pursuant to the inventive method.

In one embodiment, the barrier coating may be formed by treating the carbon-carbon composite with molten silicon. The molten silicon may be reactive and form a silicon carbide barrier on the carbon-carbon composite surface. This type of barrier coating may be referred to as a reaction formed barrier coating.

In one embodiment, the barrier coating may be porous, and the pores may be continuous, interconnected, or otherwise open to define pathways leading from a barrier coating surface into the barrier coating body. The porosity may be in the range from 8 to 13% by volume. The porosity can be measured by displacement in a liquid, such as ISOPAR-M, under vacuum.

To provide for porosity of a barrier coating, in preparation for treatment with the oxidation inhibiting composition and optional pretreating composition in accordance with the present invention, a subsequent heating or cooling step after application of the barrier coating is applied may be employed. This thermal treatment step can be used to micro-crack the barrier coating in a predetermined manner. The micro-cracks may act as pores that receive the oxidation inhibiting composition and optional pretreating composition provided by the inventive method.

In one embodiment, the barrier coating may have a thickness in the range from 12.5 micrometers (0.0005 inch) to 125 micrometers (0.005 inch), and in one embodiment from 25 micrometers (0.001 inch) to 76 micrometers (0.003 inch), and in one embodiment from 25 micrometers (0.001 inch) to 50 micrometers (0.002 inch).

The inventive method may be used to treat a carbon-carbon composite, whether or not a barrier coating has been applied to the composite. The carbon-carbon composite may be porous and contain catalytic materials (e.g., sodium, potassium, etc.) in its pores, as indicated above. In embodiments wherein a barrier coating has not been applied, the pretreating composition provided by one embodiment of the inventive method may penetrate the pores of the carbon-carbon composite. In embodiments wherein a barrier coating has been applied, the pretreating composition may also penetrate the pores of the barrier coating as well as pores in the carbon-carbon composite underlying the barrier coating. A barrier coating may be applied to the carbon-carbon composite subsequent to the carbon-carbon composite being treated with the oxidation inhibiting composition and/or optional pretreating composition.

### Treating the Carbon-Carbon Composite with the Oxidation Inhibiting Composition:

The inventive method may comprise applying an oxidation inhibiting composition comprising at least one phosphate glass to the carbon-carbon composite, and heating the composite at a temperature sufficient to adhere the phosphate glass to the carbon-carbon composite. In one embodiment, the phosphate glass may be combined with at least one carrier liquid. In one embodiment, the phosphate glass may be combined with at least one ammonium and/or metal phosphate. In one embodiment, the phosphate glass may be combined with at least one refractory compound. In one embodiment, the phosphate glass may be combined with at least one carrier liquid and at least one wetting agent. In one embodiment, the phosphate glass may be combined with at least one carrier liquid, at least one ammonium and/or metal phosphate, optionally at least one refractory compound, and optionally at least one wetting agent.

The phosphate glass may be referred to as frit or glass frit. The phosphate glass is in the form of particulate solids, however when a carrier liquid is used some of the phosphate may be dissolved in the carrier liquid. In one embodiment, the phosphate glass may be acidic. The particulate solids may have an average particle size up to 250 micrometers, and in one embodiment in the range from 0.1 to 50 micrometers, and in one embodiment in the range from 0.1 to 20 micrometers, and in one embodiment in the range from 2 to 10 micrometers, and in one embodiment in the range from 3 to 7 micrometers.

The phosphate glass may be prepared by combining a phosphorus pentoxide ($P_2O_5$) or precursor thereof, with one or more alkali metal glass modifiers, one or more glass network modifiers and optionally one or more additional glass formers. The glass modifiers may function as fluxing agents. In one embodiment, the phosphate glass may be a borophosphate glass. The borophosphate glass may be formed by combining the above with boron oxide, or a precursor thereof.

The alkali metal glass modifiers that may be used include oxides of lithium, sodium, potassium, rubidium, cesium, or a mixture of two or more thereof. In one embodiment, the glass modifier may be an oxide of lithium, sodium, potassium or a mixture of two or more thereof.

The additional glass formers that may be used include oxides of boron, silicon, sulfur, germanium, arsenic, antimony, or a mixture of two or more thereof.

The glass network modifiers that may be used include oxides of vanadium, aluminum, tin, titanium, chromium, manganese, iron, cobalt, nickel, copper, mercury, zinc, thulium, lead, zirconium, lanthanum, cerium, praseodymium, neodymium, I samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium, or a mixture of two or more thereof.

In one embodiment, the phosphate glass and/or borophosphate glass may be characterized by the absence of an oxide of silicon.

The phosphate glass may be prepared by combining the ingredients of the glass and heating them to the fusion temperature. Typically, the fusion temperature may be in the range from 700 to 1500°C. The fused melt may be cooled and pulverized to form a powder. In one embodiment, the phosphate glass may be annealed to a rigid, friable state. In one embodiment, the ratio of $P_2O_5$ to metal oxide in the fused glass may be in the range from 0.25 to 5. The glass transition temperature ($T_g$), glass softening temperature ($T_s$) and the glass melting temperature ($T_m$) may be increased by increasing the time and/or temperature of the refinement.

The phosphate glass composition, before fusion, may comprise from 20 to 80 mol %, and in one embodiment from 30 to 70 mol %, and in one embodiment from 40 to 60 mol % of phosphorus pentoxide ($P_2O_5$), or precursor thereof. In one embodiment, the phosphate glass composition may comprise from 5 to 50 mol %, and in one embodiment from 10 to 40 mol %, and in one embodiment from 15 to 30 mol % of the alkali metal oxide or one or more precursors thereof. In one embodiment, the phosphate glass composition may comprise from 5 to 50 mol %, and in one embodiment from 0.5 to 20 mol % by weight of one or more of the above-indicated glass formers, or one or more precursors thereof. In one embodiment, the phosphate glass composition may comprise from 2 to 40 mol %, and in one embodiment from 0.5 to 25 mol % of one or more of the above-indicated glass network modifiers, or one or more precursors thereof. When the phosphate glass is a borophosphate glass, the concentration of the boron oxide ($B_2O_3$) or precursor thereof may be in the range from 1 to 15 mol %, and in one embodiment from 2 to 10 mol %, and in one embodiment from 4 to 8 mol % of the phosphate glass composition.

In one embodiment, the phosphate glass may be represented by the formula

$$a(A'_2O)_x(P_2O_5)_{y1}\ b(G_fO)y_2c(A''O)_z$$

wherein: A' represents at least one alkali metal glass modifier, which may function as a fluxing agent, such as lithium, sodium, potassium, rubidium, cesium, or a mixture of two or more thereof; $G_f$ represents at least one glass former, such as boron, silicon, sulfur, germanium, arsenic, antimony, or a mixture of two or more thereof; A'' represents at least one glass network modifier, such as vanadium, aluminum, tin, titanium, chromium, manganese, iron, cobalt, nickel, copper, mercury, zinc, thulium, lead, zirconium, lanthanum, cerium, praseodymium, neodymium, samarium, europium, gadolinium, terbium, dysprosium, holmium, erbium, thulium, ytterbium, actinium, thorium, uranium, yttrium, gallium, magnesium, calcium, strontium, barium, tin, bismuth, cadmium or a mixture of two or more thereof; a represents the number of fluxing agents present and may range from 1 to 5; b represents the number of glass formers present and may range from 0 to 10; c represents the number of glass network modifiers and may range from 0 to 30; x represents the mole fraction of glass modifier or fluxing agent and may be in the range from 0.050 to 0.500; $y_1$ represents the mole fraction of $P_2O_5$ and may be in the range from 0.040 to 0.950, and in one embodiment from 0.40 to 0.80; $y_2$ represents the mole fraction of glass former and may be in the range from 0 to 0.20, and in one embodiment from 0.01 to 0.15; z represents the mole fraction of glass network modifiers and may be in the range from 0.01 to 0.5, and in one embodiment from 0.1 to 0.4; $x+y_1+y_2+z=1$; and $x<y_1+y_2$.

In one embodiment, the phosphate glass may comprise phosphorus, magnesium and an alkali metal (A'). This glass composition may be represented by the formula: $(A'_2O)X(P_2O_5)_{y1}(MgO)_z$ wherein A' is lithium, sodium, potassium, rubidium and/or cesium, x is in the range from 0.050 and 0.500, $y_1$ is in the range between 0.200 and 0.900, z is in the range between 0.010 and 0.150, and $x+y_1+z=1$.

In one embodiment, the phosphate glass may comprise phosphorus, lithium and boron. This grass composition may be represented by the formula: $(Li_2O)_x(P_2O_5)_{y1}(B_2O_3)_{y2}$ wherein x is in the range from 0.050 to 0.500, $y_1$ is in the range from 0.030 to 0.800, $y_2$ is in the range from 0.010 to 0.150, and $x+y_1+y_2=1$.

As indicated above, glass network modifiers can be added to the phosphate glass composition. These glass network modifiers may function as fluxing agents and/or stabilizers to enhance the physical and/or chemical characteristics of the phosphate glass and to resist water and/or devitrification. When the phosphate glass comprises phosphorus, boron, a glass network modifier (A'') and an alkali metal (A'), the glass may be represented by the formula: $(A'_2O)_x(P_2O_5)y_1(B_2O_3)_{y2}(A''O)_z$ wherein x is in the range from 0.050 to 0.500, $y_1$ is in the range from 0.030 to 0.800, $y_2$ is in the range from 0.010 to 0.150, z is in the range from 0.010 to 0.300, and $x+y_1+y_2+z=1$. In one embodiment, A'' is magnesium and the phosphate glass may be represented by the formula: $(A'_2O)_x(P_2O_5)_{y1}(B_2O_3)_{y2}(MgO)_z$.

In one embodiment, the phosphate glass may comprise phosphorus, boron, magnesium, barium, and an alkali metal. This glass composition may be represented by the formula: $(A'_2O)_x(P_2O_5)_{y1}(B_2O_3)_{y2}(MgO)_{z1}(BaO)_{z2}$ wherein A' is an alkali metal, x is in the range from 0.050 to 0.500, $y_1$ is in the range from 0.030 to 0.800, $y_2$ is in the range from 0.010 to 0.150, $z_1$ is in the range from 0.010 to 0.200, $z_2$ is in the range from 0.010 to 0.200, and $x+y_1+y_2+z_1+z_2=1$.

In one embodiment, the phosphate glass may comprise phosphorus, boron, aluminum, potassium and sodium. This glass composition may be represented by the formula:

$$(Na_2O)_{x1}(K_2O)_{x2}(P_2O_5)y1(B_2O_3)_{y2}(Al_2O_3)_z$$

where the alkali metal fluxing agent is represented by Na and K where $x_1+x_2$ is in the range from 0.050 to 0.500, $y_1$ is in the range from 0.030 to 0.800, $y_2$ is in the range from 0.010 to 0.700, and z is in the range from 0.010 to 0.200; $x_1+x_2+y_1+y_2+z=1$ and $x_1+x_2<y_1+y_2$.

In one embodiment, the phosphate glass may contain phosphorus, boron, magnesium, barium, aluminum, and an alkali metal flux (A'). This glass composition may be represented by the formula:

$$(A'_2O)_x(P_2O_5)_{y1}(B_2O_3)_{y2}(MgO)_{z1}(BaO)_{y2}(Al_2O_3)_{z3}$$

where A' is an alkali metal fluxing agent, x is in the range from 0.050 to 0.500, $y_1$ is in the range from 0.030 to 0.800, $y_2$ is in the range from 0.010 to 0.700, $z_1$ is in the range from 0.010 to 0.200, $z_2$ is in the range from 0.010 to 0.200, $z_3$ is in the range from 0.010 to 0.200, $x+y_1+y_2+z_1-+z_2+z_3=1$ and $x<y_1+y_2$.

In one embodiment, the phosphate glass may contain phosphorus, boron, silicon, aluminum, potassium and sodium. This glass composition may be represented by the formula:

$$(Na_2O)_{x1}(K_2O)_{x2}(P_2O_5)_{y1}(B_2O_3)_{y2}(SiO_2)_{y3}(Al_2O_3)_{z1}$$

where the alkali metal fluxing agent is represented by Na and K where $x_1+x_2$ is in the range from 0.050 to 0.500, $y_1$ is in the range from 0.030 to 0.800, $y_2$ is in the range from 0.010 to 0.700, $y_3$ is in the range from 0.010 to 0.200, $z_1$ is in the range from 0.010 to 0.200, $x_1+x_2+y_1+y_2+y_3+z_1=1$ and $x_1+x_2<y_1+y_2$.

In one embodiment, the phosphate glass may contain phosphorus, boron, aluminum, magnesium, barium, and lithium. This glass composition may be represented by formula:

$$(LiO)_x(P_2O_5)y_1(B_2O_3)y_2(MgO)_{z1}(BaO)_{z2}(Al_2O_3)_3$$

where x is in the range from 0.050 to 0.500. $y_1$ is in the range from 0.030 to 0.800, $y_2$ is in the range from 0.010 to 0.700. $z_1$ is in the range from 0.010 to 0.200, $z_2$ is in the range from 0.010 to 0.200, $z_3$ is in the range from 0.010 to 0.200, $x+y_1+y_2+z_1+z_2+z_3=1$ and $x<y_1+y_2$.

In one embodiment, the phosphate glass may contain phosphorus, boron, silicon, magnesium, barium, and lithium. This glass composition may be represented by formula:

$$(LiO)_x(P_2O_5)_{y1}(B_2O_3)_{y2}(SiO_2)_{y3}(MgO)_{z1}(BaO)_{z2}(Al_2O_3)_{z3}$$

where x is in the range from 0.050 to 0.500, $y_1$ is in the range from 0.030 to 0.800, $y_2$ is in the range from 0.010 to 0.700, $y_3$ is in the range from 0.010 to 0.200, $z_1$ is in the range from 0.010 to 0.200, $z_2$ is in the range from 0.010 to 0.200, $z_3$ is in the range from 0.010 to 0.200, $x+y_1+y_2+y_3+z_1+z_2+x_3=1$ and $x<y_1+y_2+y_3$.

In one embodiment, the phosphate glass may comprise phosphorus, lithium, boron, magnesium and barium. This glass composition may be represented by the formula: $(Li_2O)_x(P_2O_5)y_1 (B_2O_3)y_2(MgO)_{z1}(BaO)_{z2}$ wherein x is in the range from 0.050 to 0.500, y1 is in the range from 0.030 to 0.800, Y2 is in the range from 0.010 to 0.150, z1 is in the range from 0.010 to 0.200, z2 is in the range from 0.010 to 0.200, and $x+y1+y2+z1+z2=1$.

The chemical and physical properties of the phosphate glass may be determined by the initial formulation, the composition of the individual glass components, refining, annealing and/or aging conditions. The properties of the phosphate glass that are desirable for this invention may include an acidic formulation, durability, hydrolytic stability, reactivity and plasticity. The type and ratio of the glass components may dictate these properties. For instance, a useful glass can be prepared using $NH_4H_2PO_4$, $Li_2CO_3$, $B(OH)_3$ and $MgCO_3$. A molar ratio of $[P_2O_5]:[Li_2O]$ greater than 1 may yield an acidic formulation. The addition of $B_2O_3$ (from $B(OH)_3$) may enhance the durability of the phosphate glass while the selection of $Li_2O$ (from $Li_2CO_3$) and MgO (from $MgCO_3$) may reduce water sensitivity as well as modify thermal expansion properties.

In one embodiment, the phosphate glass may contain less than 10% by weight, and in one embodiment less than 5%, and in one embodiment less than 1% by weight silicon. In one embodiment, the phosphate glass may be free of silicon.

A suitable borophosphate glass is manufactured under the name FyreRoc® glass frit by The Goodrich Corporation (Charlotte, NC).

The carrier liquid may comprise water, a non-aqueous polar liquid, or a mixture thereof. The non-aqueous polar liquid may comprise a lower alcohol ($C_1$-$C_8$ alcohols), aldehyde ($C_2$-$C_8$ aldehydes), a ketone ($C_3$-$C_8$ ketones), a glycol, a polyglycol (e.g., polypropylene glycol), a polyglycol ether, or a mixture of two or more thereof.

The metal phosphates that may be used may include magnesium phosphate, manganese phosphate, aluminum phosphate, zinc phosphate, or mixtures of two or more thereof. The metal phosphate may comprise aluminum orthophosphate, monoaluminum phosphate, or a mixture thereof.

The ammonium phosphate may comprise ammonium dihydrogen phosphate, ammonium hydrogen phosphate, or a mixture thereof.

The refractory compound may comprise a refractory oxide. The refractory compound may be in the form of a preformed crystalline phase. Examples include aluminum orthophosphate, boron phosphate, manganese dioxide, an alkaline earth oxide such as magnesium oxide, an alkaline earth aluminum oxide such as magnesium aluminum oxide, zinc oxide, aluminum oxide, spinel, a substituted spinel, or a mixture of two or more thereof. Nonoxide ceramic compounds such as aluminum nitride, boron nitride, silicon carbide, boron carbide, silicon nitride, titanium boride, zirconium boride, or a mixture of two or more thereof can also be added. The addition of elemental forms such as boron, silicon or phosphorus can be useful. If the application of multiple layers are desired, the composition of each layer can be either of the same composition or of a different composition. A layer with reduced flow or enhanced barrier properties may be desired with an additional layer applied atop with increased flow or sealant properties. Such a composition is useful for oxidation protection over an extended temperature range. The weight ratio of the refractory compound to the phosphate glass may be up to 0.9, and in one embodiment in the range from 0.01 to 0.9, and in one embodiment in the range from 0.01 to 0.5, and in one embodiment from 0.05 to 0.25.

The wetting agent may be referred to as a surfactant. The wetting agent may comprise one or more polyols. The polyol may contain two, three, or four hydroxyl groups, typically two hydroxyl groups. In one embodiment, the polyol may be alkoxylated. In one embodiment, the polyol may be an acetylenic polyol. The acetylenic polyol may be branched. Examples of acetylenic polyols include dimethylhexynol, dimethyloctynediol, and tetramethyldecynediol. Acetylenic polyols are available from Air Products & Chemicals, Inc. under the tradename Surfynol. An example of a useful acetylenic polyol is Surfynol 104.

The acetylenic polyol may be alkoxylated. These materials may be prepared by treating an acetylenic polyol with an epoxide, for example, an epoxide of 2 to 8 carbon atoms, such as ethylene oxide, propylene oxide, butylene oxide, etc. Examples of useful alkoxylated acetylenic polyols include Surfynol 420, Surfynol 440, Surfynol 465 and Surfynol 485

The wetting agent may comprise an alkoxylated monohydric alcohol. The alkoxylated monohydric alcohols may be prepared by reacting a monohydric alcohol with an epoxide, such as those epoxides described above. In one embodiment, the alcohol may contain from 8 to 24, and in one embodiment from 10 to 18 carbon atoms. The alkoxylated monohydric alcohol may be an alkoxylated linear alcohol. An example of a useful alkoxylated alcohol is Polytergent SL-62, which is available from Olin Corporation.

In one embodiment, the wetting agent may comprise a silicone surfactant. The silicone surfactants include polysiloxanes, such ass amino-functional, hydroxy-functional, acetoxy-functional, and alkoxy-functional polysiloxanes. Examples of silicone surfactants include polydimethylsiloxane, polydiethylsiloxane, polymethylethylsiloxane, polymethylphenylsiloxane, polydiphenylsiloxane, diphenylsilanediol, block copolymers of a polysiloxane and a polyoxyalkylene, etc. Commercially available silicone surfactants include Abil-B 8800, series of polysiloxane polyether compositions and Abil Wax dialkoxy dimethylpolysiloxanes, polysiloxane polyalkyl copolymers, and polysiloxane polyalkylene copolymers from Goldschmidt Chemical Company; Alkasil NE silicone polyalkoxylate block copolymers from Rhone Poulenc; Dow Corning silicone glycol copolymers; Hartosaft S5793 amino functional silicone emulsion from Hart Products Co.; and BYK-346 polydimethylsiloxane from BYK Chemie.

In one embodiment, the oxidation inhibiting composition may comprise: from 5 to 95% by weight, and in one embodiment from 10 to 45% by weight of at least one phosphate glass; from 5% to 95% by weight, and in one embodiment from 20 to 70% by weight, and in one embodiment from 30 to 60% by weight of at least one carrier liquid; up to 40% by weight, and in one embodiment from 2 to 40% by weight, and in one embodiment from 5 to 30% by weight of at least one ammonium and/or metal phosphate; up to 50% by weight, and in one embodiment from 0.2 to 50% by weight of at least one refractory compound; and up to 3% by weight, and in one embodiment from 0.2 to 3% by weight, and in one embodiment from 0.3 to 2% by weight of at least one wetting agent.

In one embodiment, the oxidation inhibiting composition may be in the form of an aqueous slurry and may comprise: from 30 to 45% by weight, and in one embodiment from 35 to 40% by weight of at least one phosphate glass; from 40 to 60% by weight, and in one embodiment from 45 to 55% by weight water; from 5 to 20% by weight, and in one embodiment from 10 to 15% by weight of at least one ammonium and/or metal phosphate; up to 50% by weight, and in one embodiment from 0.2 to 50% by weight of at least one refractory compound; and up to 3% by weight, and in one embodiment from 0.2 to 1.5% by weight of at least one wetting agent.

In one embodiment, the oxidation inhibiting composition may have a pH of less than 8, and in one embodiment less than 6, and in one embodiment less than 4, and in one embodiment less than 3.

The oxidation inhibiting composition may be applied to the carbon-carbon composite by painting, dipping, spraying, or other application methods, selected with reference to application specific criteria. This criteria may include, viscosity, end-use, economic consideration, ingredients used, depth of penetration desired, and the like. The oxidation inhibiting composition may be applied to the carbon-carbon composite at a treatment level from 10 to 60 mg/cm$^2$, and in one embodiment from 15 to 50 mg/cm$^2$, and in one embodiment from 20 to 40 mg/cm$^2$. A useful treatment level may be from 20 to 30 mg/cm$^2$, and in one embodiment from 22 to 26 mg/cm$^2$. In one embodiment, the oxidation inhibiting composition may be applied to preselected regions of the carbon-carbon composite that may be otherwise susceptible to oxidation. For example, aircraft brakes may have the oxidation inhibiting composition applied to the brake stators and lugs only.

Treating the carbon-carbon composite with the oxidation inhibiting composition may cause the carbon-carbon composite to gain weight. A treated carbon-carbon composite may have a weight gain in the range of from 0.25 to 30 mg per square centimeter of area of the carbon-carbon composite that is treated (mg/cm$^2$). The treated carbon-carbon composites may be dried to remove liquid from the oxidation inhibiting composition. This drying step may be optional. This drying step may be conducted at a temperature in the range from 50°C to 300°C for 0.1 to 24 hours. Drying may be distinguished from dehydration in that water may be present both in a free state and in a bound state. The oxidation inhibiting composition may be in the form of aqueous slurry and thus may have free water as a carrier liquid. Some of the oxidation inhibiting composition ingredients may have water in a bound, hydrating form. Drying may be used to remove free water. Dehydrating may be used to remove hydrated water.

The treated carbon-carbon composite may be heated or baked, at a temperature in the range from 500°C to 1000°C, and in one embodiment 700°C to 900°C, for a sufficient period of time to adhere the phosphate glass to the carbon-carbon composite. This heating step may be performed in an inert environment, such as under a blanket of inert gas (e.g., nitrogen, argon, and the like). This heating step may be conducted for a period from 0.5 to 10 hours.

In one embodiment, the carbon-carbon composite may be subjected to multiple treatment cycles, that is, multiple cycles wherein the carbon-carbon composite is treated with the oxidation inhibiting composition and then heated or baked. For example, from 1 to 4, and in one embodiment 1 or 2 treatment cycles may be used.

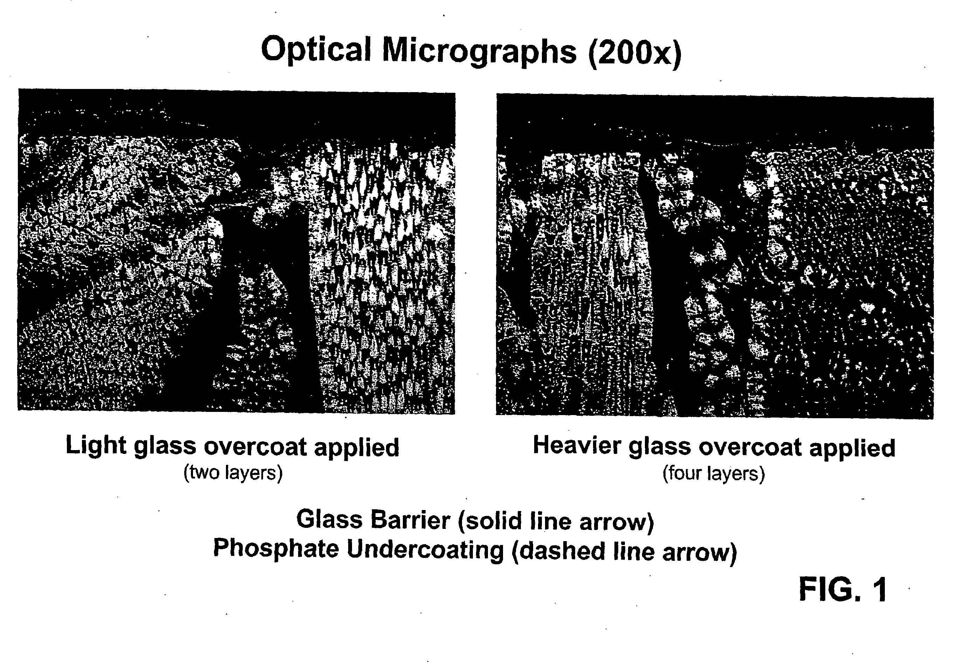

The phosphate glass layer that is applied to the carbon-carbon composite pursuant to the foregoing treating process may be observed using known techniques, for example, scanning electron microscopy (SEM). For example, Fig. 1 is an optical micrograph showing phosphate glass layers (glass barrier) at a magnification of 200X, where in the figure on the left (two layers) the oxidation inhibiting composition is applied using two treatment cycles, and in the figure on the right (four layers) the oxidation inhibiting composition is applied using four treatment cycles. The composition of the phosphate glass layer may be analyzed using known techniques such as energy dispersive x-rays (EDX). EDX may be used to detect the presence of phosphorous as well as metals such as barium, magnesium, and the like.

Examples 1-5

The following Examples 1-5 disclose phosphate glasses that can be used in the inventive oxidation inhibiting composition. These phosphate glasses may be prepared using the reactants shown in Table 1. In Table 1, all numerical values are in parts by weight.

Table 1

| Ingredient | Ex. 1 | Ex. 2 | Ex. 3 | Ex. 4 | Ex. 5 |
|---|---|---|---|---|---|
| $NH_4H_2PO_4$ | 90.40 | 132.86 | 148.94 | 126.53 | 88.83 |
| $MgCO_3$ | 1.58 | 8.85 | 8.73 | 8.83 | 3.25 |
| $BaCO_3$ | --- | 20.72 | 5.11 | 20.67 | --- |
| $Li_2(CO_3)_2$ | 4.84 | 15.52 | 15.31 | 17.42 | 4.17 |
| $B(OH)_3$ | 3.21 | 6.44 | 6.36 | 6.43 | 3.16 |

The ammonium dihydrogen phosphate ($NH_4H_2PO_4$), boric acid ($B(OH)_3$), magnesium carbonate ($MgCO_3$) barium carbonate ($BaCO_3$) and lithium carbonate ($Li_2(CO_3)_2$) are combined, blended and ground to form a dry powder. Example 1 is heated at 250°C for 4 hrs and then at 750°C for 5 hrs. Examples 2-4 are heated at 500°C for 4 hrs. and then at 900°C for 4 hrs. Example 5 is heated at 110°C for 3 hrs, then at 230°C for 18 hrs and then 715°C for 1 hr. In one embodiment, the glass may be heated up to 1300°C or above to facilitate manufacturing. The molten glass is poured onto a quench plate and allowed to cool. The glass is then ground to the desired particle size.

Example 6

A mixture of 100.00 parts by weight of $NH_4H_2PO_4$, 4.26 parts by weight of $B(OH)_3$, 5.87 parts by weight of $MgCO_3$, 3.44 parts by weight of $BaCO_3$ and 10.28 parts by weight of $Li_2CO_3$ is combined, blended and ground to form a dry powder. The mixture is fused stepwise with a final refinement stage at 900°C for 4 hours. The resulting borophosphate glass is quenched and ground into a fine powder.

Example 7

A mixture of 100.00 parts by weight of $NH_4H_2PO_4$, 6.17 parts by weight of $B(OH)_3$, 7.85 parts by weight of $MgCO_3$ 5.21 parts by weight of $BaCO_3$, 7.36 parts by weight of $Al(PO_3)_3$ and 11.41 parts by weight of $Li_2CO_3$ is combined, blended and ground to form a dry powder. The mixture is fused stepwise with a final refinement stage at 900°C for 4 hours. The resulting borophosphate glass is quenched and ground into a fine powder. Compounds that yield the equivalent oxide content of the carbonate and/or phosphate precursors indicated above may be substituted therefor.
The following Table 2 discloses oxidation inhibiting compositions that may be used with the inventive method:

Table 2

| Ingredient | Composition Ranges (wt.%) |
|---|---|
| Water | 30-60, or 35-50, or 42 - 45 |
| MALP (Monoaluminum Phosphate - - 50% aqueous solution) | 2-25, or 5- 20, or 10 -14 |
| Ammonium Dihydrogen Phosphate | 0.5-10, or 1-8, or 2 - 4 |
| Phosphate Glass Powder | 15-55, or 20-45, or 32 - 38 |
| Aluminum Orthophosphate | 0 - 5 |
| Surfactant or Wetting Agent (Surfynol SE-F*, 465, 485 or Disperbyk 191**) | 0 - 3 |
| *Surfynol SE-F, 465 and 485 are available from Air Products and are identified as a non-ionic surfactants. **Disperbyk 191 is available from BYK Chemie and is identified as a copolymer with pigment affinic groups. | |

The following Table 3 contains illustrative examples of the oxidation inhibiting compositions that may be used. The phosphate glass powder (PGP) used in the following mixtures is the phosphate glass from Example 6. In Table 3, all numerical values are in parts by weight.

Table 3

| Example # | PGP | $NH_4H_2PO_4$ | MALP | Water | $AlPO_4$ | Surfynol SE-F |
|---|---|---|---|---|---|---|
| 8 | 15 | 5 | 10 | 12 | 0 | 0.10 |
| 9 | 15 | 5 | 5 | 18 | 0 | 0.20 |
| 10 | 15 | 1 | 10 | 18 | 1 | 0.10 |
| 11 | 15 | 1 | 5 | 12 | 1 | 0.20 |
| 12 | 10 | 5 | 10 | 12 | 0 | 0.10 |
| 13 | 10 | 5 | 5 | 18 | 0 | 0.20 |
| 14 | 10 | 1 | 10 | 18 | 1 | 0.10 |
| 15 | 10 | 1 | 5 | 12 | 1 | 0.20 |
| 16 | 15 | 5 | 10 | 18 | 1 | 0.20 |
| 17 | 10 | 1 | 5 | 12 | 0 | 0.10 |
| 18 | 15 | 5 | 5 | 20 | 0 | 0.03 |
| 19 | 15 | 5 | 5 | 20 | 0 | 0 |

The average penetration depth of the Mixtures 8-19 disclosed in Table 3 may be evaluated using small penetration coupons (1.77 cm (1/2") wide x 2.54 cm (1") long x disk thickness) machined from the ID of an A320 DURACARB® rotor. The effect of mixture composition, the number of bake cycles (1 vs 2), the bake temperature, and the amount applied or load (16 vs. 20 vs. 24 mg/cm$^2$) on average penetration for the oxidation inhibiting compositions disclosed in Table 3 is indicated in Table 4. Unless otherwise indicated, the bake temperature is 1400 - 1500°F (760-815°C) and the bake time is 2 to 6 hours. The results are disclosed in the following Table 4:

Table 4

| Example # (load) | # Apps/# Bakes | Ave Pen Depth (cm) |
|---|---|---|
| 8 (24) | 2/2 | 0.3 |
| 9 (24) | 2/2 | 0.2 |
| 10 (24) | 2/2 | 0.2 |
| 11 (24) | 2/2 | 0.3 (787.8, °C (1450°F), 2h) |
| 11 (20) | 2/2 | 0.2 |
| 11 (16) | 2/2 | 0.2 |
| 11 (24) | 2/1 | 0.4 |
| 11 (24) | 2/2 | 0.3 (871 °C (1600°F), 2h) |
| 12 (24) | 2/2 | 0.3 |
| 13 (24) | 2/2 | 0.2 |
| 14 (24) | 2/2 | 0.4 |
| 15 (24) | 2/2 | 0.4 |
| 16 (24) | 2/2 | 0.2 |
| 16 (20) | 2/2 | 0.3 |
| 16 (16) | 2/2 | 0.2 |
| 16 (24) | 2/1 | 0.2 |
| 17 (24) | 2/2 | 0.2 |
| 18 (24) | 2/2 | 0.5 |
| 19 (24) | 2/2 | 0.4 |

The oxidation inhibiting compositions of the present invention show good penetration of the carbon-carbon composite. Two coats of each mixture are applied to the outer diameter (OD) and inner diameter (ID) surfaces of an A320 DURACARB® segment sample. After a 10-day humid hold at 85°F (29.4°C) and 95% relative humidity, the samples are soaked in a potassium acetate solution, air dried, and "burned" or oxidized to reveal the presence and location of deposits from the oxidation inhibitor. Migration of the constituents of the oxidation inhibiting composition to the wear face of the segment samples are not observed with any of these compositions.

Oxidation inhibiting compositions are tested for thermal oxidation at 1250°F (676.7°C) in air for 30 hours. Oxidation coupons are prepared from the ID and OD surfaces of an A320 DURACARB® stator, cleaned with Isopar-M, ultrasonically degreased with isopropyl alcohol, oven dried, coated by immersion with two applications (one bake cycle following each application) of each mixture, and baked at 1450°F (787.8°C) for 2 hours. Each mixture is applied to an OD and ID coupon for comparison. A summary of the test results is provided in Table 5 below:

Table 5

| (Wet load) Example # | # Applications/ # Bakes | Average %OPS | % Carbon Loss OD | ID |
|---|---|---|---|---|
| 8 (24) | 2/2 | 0.90 +/- 0.22 | 15.83 | 6.46 |
| 9 (24) | 2/2 | 0.70 +/- 0.15 | 9.18 | 9.36 |

(continued)

| (Wet load) Example # | # Applications/ # Bakes | Average %OPS | % Carbon Loss OD | ID |
|---|---|---|---|---|
| 10 (24) | 2/2 | 1.30 +/- 0.49 | 7.08 | 8.70 |
| 11 (24) | 2/2 | 1.22 +/- 0.56 | 5.91 | 6.99 |
| 11 (16) | 2/2 | 0.89 +/- 0.24 | 10.11 | 6.31 |
| 11 (12) | 2/2 | 0.85 +/- 0.23 | 11.56 | 7.27 |
| 11 (24) | 2/1 | 0.62 +/- 0.18 | 17.37 | 17.13 |
| 12 (24) | 2/2 | 0.71 +/- 0.19 | 8.37 | 10.56 |
| 13 (24) | 2/2 | 0.70 +/- 0.07 | 8.08 | 5.35 |
| 14 (24) | 2/2 | 1.07 +/- 0.33 | 9.93 | 8.70 |
| 15 (24) | 2/2 | 1.08 +/- 0.30 | 11.48 | 9.41 |
| 16 (24) | 2/2 | 0.96 +/- 0.26 | 8.91 | 8.41 |
| 16(16) | 2/2 | 0.67 +/- 0.12 | 16.14 | 11.72 |
| 16 (12) | 2/2 | 0.65 +/- 0.17 | 9.46 | 11.38 |
| 16(24) | 2/1 | 0.74 +/- 0.12 | 21.99 | 9.45 |
| 17 (24) | 2/2 | 0.91 +/- 0.26 | 5.79 | 5.41 |
| 18 (24) | 2/2 | 0.74 +/- 0.16 | 7.40 | 4.40 |
| 19 (24) | 2/2 | 0.65 +/- 0.34 | 10.47 | 7.14 |

A second batch of oxidation coupons is prepared from the ID surface of an A320 DURACARB® rotor, coated (12 to 16 mg/cm$^2$), baked twice using a freshly mixed slurry, and oxidized at 1250°F (676.7°C) for 30 hours. A summary of the test results is provided below:

Table 6

| Example # | Average %OPS | Average % Carbon Loss |
|---|---|---|
| 10 | 2.14 +/- 0.09 | 4.75 +/- 1.80 |
| 11 | 1.72 +/- 0.08 | 5.05 +/- 1.25 |
| 13 | 1.06 +/- 0.06 | 9.26 +/- 1.39 |
| 17 | 1.25 +/- 0.06 | 7.78 +/- 1.42 |
| 19 | 1.12 +/- 0.09 | 10.28 +/- 1.58 |

Example 20

An oxidation inhibiting composition is prepared by mixing: 50.0 parts by weight distilled water; 37.5 parts by weight of the borophosphate glass powder formed in Example 6; 12.5 parts by weight ammonium dihydrogen phosphate; and 0.5 parts by weight BKY 346 (a polydimethylsiloxane available from BYK Chemie). This composition is in the form of a glass slurry.

Test samples for humidity exposures are prepared by placing 3-4 grams of the glass slurry from Example 20 in a carbonized graphite crucible. Two crucibles are prepared. Oxidation test coupons are prepared from a SUPER-CARB® heat sink by machining 2,54 cm (1") square by 0,635 cm (¼") thick coupons radially from either the OD surface of stators or else the ID surface of rotors. Each coupon is dimensioned and weighed. The density and amount of open porosity are measured using a wet-dry method with mineral spirits. Test coupons are impregnated with the oxidation inhibiting composition by immersing the coupon for up to two minutes and then drying on a cardboard sheet. Each impregnated oxidation coupon and carbonized graphite crucible is heated to 1250°F (676.7°C) in flowing nitrogen for 2 hours to remove water and to synthesize a solid glass network on the carbon-carbon composite surface or in the crucible. Duplicate oxidation coupons are inhibited by applying each with either two or four applications of the above-indicated oxidation inhibiting composition and then baking each coupon at 1400°F (760°C) for 2 hours before each new application.

Humidity exposures are performed on solid glass inhibitor samples by placing them in a humidity cabinet at 30°C and at 95% relative humidity for up to 15 days. The weight of each crucible is measured at least twice a day. Weight change of the solid inhibitor resulting from the absorption of water molecules is calculated with respect to time using the following formula:

$$\% \text{ Moisture Pickup (or } \% \text{ MPU)} = ((C_i - C_o)/(C_o - C_b)) \,(100) \qquad (I)$$

where $C_i$ is the current weight of the crucible after exposure, $C_o$ is the weight of the crucible and solid inhibitor before exposure, and $C_b$ is the weight of the empty crucible without inhibitor.

Oxidation tests are performed at 1200°F (648.9°C) in air for up to 30 hours. Oxidation coupons are placed on alumina rods and inserted into a furnace in an air atmosphere flowing at approximately 6000 standard cubic centimeters per minute. The coupons are removed from the furnace and weighed after 1, 2, 4, 8, 24, and 30 hours of oxidation. Carbon weight loss is calculated using the following formula:

$$\% \text{ Carbon Weight Loss (or } \% \text{ CWL)} = ((W_i - W_o)/W_c)\,(100) \qquad (II)$$

where $W_i$ is the current weight of the coupons after oxidation, $W_o$ is the weight of the coupon and inhibitor after bake out, and $W_c$ is the weight of the oxidation coupon before application of inhibitor.

The results of the oxidation screening tests are summarized in the following Table 7:

Table 7

| Coats of Oxidation Inhibitor | Oxidation Screening Tests (Percent Carbon Weight Loss after 30 hours at 1200°F (648.9°C) in Air) |
| --- | --- |
| 1 coat | 5.9 |
| 2 coats | 2.9 |
| 4 coats | 1.2 |

The effect of catalysts is evaluated. Oxidation coupons are prepared using either 2 coats or 4 coats of the oxidation inhibitor composition. Duplicate coupons are impregnated and baked for two hours in a flowing nitrogen atmosphere at 1400°F (760°C). Following an initial eight hours of thermal oxidation, each sample is immersed in a 5% potassium acetate solution for at least one minute, air dried, and then oxidized at 1200°F (648.9°C) for up to thirty additional hours. The results of eight hours of initial thermal oxidation and the subsequent catalytic oxidation screening tests are presented in the following Table 8:

Table 8

| Coats of Oxidation Inhibitor | Pre-Oxidation Tests (Percent Carbon Weight Loss after 8 hours at 1200°F (648.9°C) in Air) | Catalytic Oxidation Screening Tests (Percent Carbon Weight Loss after 30 hours at 1200°F (648.9°C) in Air) |
| --- | --- | --- |
| 2 coats | 0.22 | 4.70 |
| 4 coats | 0.14 | 1.13 |

The effect of service temperature is evaluated. Oxidation coupons are prepared using the above-indicated oxidation inhibitor composition. Duplicate coupons are impregnated and baked for 2 hours in a flowing nitrogen atmosphere at 1400°F (760°C). Oxidation tests are performed at 1500°F (815.6°C) in air for up to 30 hours. The results of this exposure to this simulated service cycle are presented in the following Table 9:

Table 9

| Coats of Oxidation Inhibitor | Oxidation Screening Tests (Percent Carbon Weight Loss after 6 hours at 1500°F (815.6°C) in Air) | Oxidation Screening Tests (Percent Carbon Weight Loss after 10 hours at 1500°F (815.6°C) in Air) |
|---|---|---|
| 2 coats | 12.7 | 43.0 |
| 4 coats | 7.5 | 29.8 |

Examples 21-49

The following Tables 10-12 disclose oxidation inhibiting compositions 21-49 which contain a phosphate glass (Examples 21, 30 and 40) or a phosphate glass in combination with one or more refractory oxides (Examples 22 to 29, 31 to 39 and 41 to 49). The tables also show the results of humidity and oxidation tests for these materials. In Tables 10-12, all numerical values for the concentrations of ingredients are in parts by weight.

Table 10

| Ingredient: | 21 | 22 | 23 | 25 | 26 | 27 | 28 | 29 |
|---|---|---|---|---|---|---|---|---|
| Borophosphate Glass* | 15 | 15 | 15 | 15 | 15 | 15 | 15 | 15 |
| $NH_4H_2PO_4$ | 5 | 5 | 5 | 5 | 5 | 5 | 5 | 5 |
| $H_2O$ | 20 | 20 | 20 | 20 | 20 | 20 | 20 | 20 |
| $AlPO_4$ | -- | 7.5 | - | 2.25 | 2.25 | 3.75 | 3.75 | - |
| $BPO_4$ | - | - | 7.5 | - | 1.95 | - | - | -- |
| MgO | - | - | - | - | -- | - | 0.75 | - |
| $Mg(AlO_2)_2$ | - | - | - | - | - | -- | -- | 3.75 |
| **Test Results:** | | | | | | | | |
| Humidity Gain @ 216 hrs-40.6°C (105°F)/95% RH | 0.75% | 6.23% | 0.86% | 0.65% | 0.84% | 2.84% | 3.26% | 0.35% |
| Oxidation Loss @ 676.6°C (1250°F) - 30 hrs. | 9.22% | 11.87% | 12-29% | 12.41% | 11.73% | 10.81% | 17.58% | 21.44% |
| * Glass from Example 7. | | | | | | | | |

Table 11

| Ingredient | 30 | 31 | 32 | 33 | 34 | 35 | 36 | 37 | 38 | 39 |
|---|---|---|---|---|---|---|---|---|---|---|
| Borophosphate Glass* | 15.00 | 15.00 | 15.00 | 15.00 | 15.00 | 15.00 | 15.00 | 15.00 | 15.00 | 15.00 |
| $NH_4H_2PO_4$ | 5.00 | 5.00 | 5.00 | 5.00 | 5.00 | 5.00 | 5.00 | 5.00 | 5.00 | 5.00 |
| $H_2O$ | 20.00 | 20.00 | 20.00 | 20.00 | 20.00 | 20.00 | 20.00 | 20.00 | 20.00 | 20.00 |
| $AlPO_4$ | -- | 1.25 | 1.25 | -- | 1.25 | 2.00 | 2.00 | -- | -- | 2.25 |
| $BPO_4$ | -- | -- | 1.25 | -- | 1.25 | 2.00 | -- | 2.00 | -- | 1.95 |
| $Mg(AlO_2)_2$ | -- | -- | -- | 1.25 | 1.25 | 2.00 | -- | -- | 2.00 | 1.00 |
| Humidity Gain @ 216 hrs-40.6°C (105°F)/95% RH | 1.38% | 1.27% | 1.18% | 2.67% | 7.30% | 3.70% | 0.59% | 0.39% | 2.27% | 13.41% |

(continued)

| Ingredient | 30 | 31 | 32 | 33 | 34 | 35 | 36 | 37 | 38 | 39 |
|---|---|---|---|---|---|---|---|---|---|---|
| Oxidation Loss @ 676.6°C (1250°F) - 30 hrs. | 8.35% | 5.21% | 5.37% | 6.31% | 6.62% | 7.79% | 5.80% | 5.55 % | 14.44 % | 8.18% |
| * Glass from Example 7. | | | | | | | | | | |

Table 12

| Ingredient | 40 | 41 | 42 | 43 | 44 | 45 | 46 | 47 | 48 | 49 |
|---|---|---|---|---|---|---|---|---|---|---|
| Borophosphate Glass* | 15.00 | 15.00 | 15.00 | 15.00 | 15.00 | 15.00 | 15.00 | 15.00 | 15.00 | 15.00 |
| $NH_4H_2PO_4$ | 5.00 | 5.00 | 5.00 | 5.00 | 5.00 | 5.00 | 5.00 | 5.00 | 5.00 | 5.00 |
| $H_2O$ | 20.00 | 20.00 | 20.00 | 20.00 | 20.00 | 20.00 | 20.00 | 20.00 | 20.00 | 20.00 |
| $AlPO_4$ | -- | -- | -- | 1.50 | -- | 0.75 | 0 | 0.75 | 0 | 0 |
| $BPO_4$ | - | -- | -- | -- | 1.30 | 0.65 | 1.95 | 0 | 2.60 | 1.95 |
| $Mg(AlO_2)_2$ | -- | 0.25 | 0.50 | -- | -- | 0 | 0 | 0 | 0 | 0.25 |
| Humidity Gain @ 216 hrs-40.6°C, (105°F)/95% RH | 1.14% | 0.61% | 0.68% | 0.61% | 0.73% | 0.84% | 0.42% | 1.05% | 1.60% | 0.37% |
| Oxidation Loss @ 676.6°C (1250°F) -30 hrs. | 7.07% | 6.57% | 7.10% | 7.54% | 5.26% | 5.99% | 4.99% | 5.36% | 6.73% | 5.83% |
| * Glass from Example 7. | | | | | | | | | | |

**Pretreating the Carbon-Carbon Composite:**

In one embodiment, the carbon-carbon composite may be contacted with a pretreating composition prior to application of the oxidation inhibiting composition discussed above. The pretreating composition may be referred to as an oxidation inhibiting composition. The applied pretreating composition may be referred to as a phosphate undercoating. The pretreating composition may comprise: phosphoric acid and/or at least one acid phosphate salt; at least one aluminum salt, and optionally at least one additional metal salt. The composite with the applied pretreating composition may be heated at a temperature sufficient to form a deposit from the pretreating composition in at least some of the pores of the composite, and in one embodiment, most or all, of the pores of the carbon-carbon composite. The oxidation inhibiting composition discussed above may then be applied over the deposit from the pretreating composition. The pretreating composition may function as an oxidation inhibitor. The carbon-carbon composite with the pretreating composition applied may be heated to a temperature in the range from 30 to 200 °C to dry the pretreating composition. This step can be used when the pretreating composition contains a volatile liquid. This step may be used to fix the pretreating composition at a particular predetermined depth in the pores. Drying may be distinguished from dehydration in that water may be present both in a free state and in a bound state. Some pretreating compositions may be aqueous solutions or slurries and may have free water as a carrier liquid. Some of the oxidation inhibiting composition ingredients may have water in a bound, hydrating form. Drying removes free water from an aqueous solution or slurry, while dehydrating removes hydrated water.

In one embodiment, the pretreated carbon-carbon composite may be heated, that is dried or baked, at a temperature in the range from 200°C to 1000°C, and in one embodiment 600°C to 1000°C. In one embodiment, this heating step may be conducted at a temperature in the range of 200°C to 900°C, and in one embodiment 400°C to 850°C. The heating step may be performed in an inert environment, such as under a blanket of inert gas (e.g., nitrogen, argon, and the like). This heating step may be conducted for a period up to 10 hours, and in one embodiment from 0.5 hour up to 8 hours.

In one embodiment, the pretreating composition may be applied to preselected regions of a carbon-carbon composite that may be otherwise susceptible to oxidation. For example, aircraft brakes may have the pretreating composition applied to the brake stators and lugs only.

The pretreating composition may be applied to the carbon-carbon composite by painting, dipping, spraying, chemical vapor deposition, or other application methods, selected with reference to application specific criteria. This criteria may include, viscosity, end-use, economic consideration, ingredients used, depth of penetration desired, and the like.

The pretreating composition may be applied to the carbon-carbon composite at a coat weight in the range from 10 to 60 mg/cm$^2$, and in one embodiment from 15 to 50 mg/cm$^2$, and in one embodiment from 20 to 40 mg/cm$^2$, and in one embodiment from 20 to 30 mg/cm$^2$.

In one embodiment, the pretreating composition may be applied to provide a solids treatment level, or dry film, in the range from 2.5 to 15 mg/cm$^2$; and in one embodiment from 5 to 12.5 mg/cm$^2$, and in one embodiment from 6 to 10 mg/cm$^2$.

Treating the carbon-carbon composite with the pretreating composition may cause the carbon-carbon composite to gain weight. A pretreated carbon-carbon composite may have a weight gain in the range of from 0.5 to 15 mg/cm$^2$.

The treatment level or amount of solids of the pretreating composition that is applied may be selected to provide for filling of open pores in the carbon-carbon composite at a predetermined depth of penetration. The depth of penetration may be selected with reference to the depth suitable for complete oxidation protection, and may be further selected with reference to amount that may avoid excessive penetration onto a wearing surface of the brake. In one embodiment, the preselected depth may be in the range from 2.5 to 5 mm. Differing factors may be controlled to achieve the desired depth of penetration. Among the factors that may be controlled are the viscosity of the pretreating composition, the coat weight, the contact time of the pretreating composition with the carbon-carbon composite prior to drying, the drying temperature, density, pore size and porosity of the carbon-carbon composite, and any wetting agent that may be present.

In one embodiment, the deposits from the pretreating composition may be uniformly distributed in the pores of the carbon-carbon composite, e.g. with less than 1 mm of separation between deposits. The deposits may be disposed, lodged or formed at a depth sufficient to provide oxidation protection to the carbon-carbon composites. In one embodiment, the deposits from the pretreating composition may be disposed at a depth in a range from 2 to 10 mm.

The deposits from the pretreating composition may be observed using known techniques such as microscopy (e.g., SEM). For example, Fig. 1 provides an optical micrograph at a magnification of 200X where the figure on the right shows deposits from a pretreating composition (phosphate undercoating ) in the pores of a carbon-carbon composite and underlying a phosphate glass layer (glass barrier). X-ray diffraction may be used to detect the phosphorus and aluminum in these deposits.

The pretreating composition may comprise: (i) water, a nonaqueous polar liquid, or a mixture thereof; (ii) phosphoric acid or an acid phosphate salt; (iii) an aluminum salt; and (iv) optionally at least one additional salt.

In one embodiment, the pretreating composition may comprise an aqueous composition. The pretreating composition may be in the form of a solution, dispersion or slurry. The nonaqueous polar liquid may be an alcohol, an aldehyde, a ketone, etc. The alcohol may contain 1 to 8 carbon atoms, and in one embodiment 1 to 4 carbon atoms. The aldehyde may contain 2 to 8 carbon atoms. The ketone may contain 3 to 8 carbon atoms. In one embodiment, the pretreating composition may contain up to 60% by weight of water, a nonaqueous polar liquid or mixture thereof, and in one embodiment from 20 to 60% by weight. When nonaqueous polar liquids are used in conjunction with water, the concentration of polar liquid relative to water may be in the range of from 0.1 to 25% by weight, and in one embodiment from 1 to 15% by weight. In one embodiment, the concentration of nonaqueous polar liquid other than water that is used may be less than 10% by weight of the total solvent present (water plus nonaqueous polar liquid), and in one embodiment less than 1% by weight.

A solution of orthophosphoric acid may be used as a source for the phosphoric acid (ii). The acid phosphate salt may be an ammonium phosphate. The acid phosphate salt may comprise ammonium dihydrogen phosphate or ammonium hydrogen phosphate. The phosphoric acid or acid phosphate salt may be present in the pretreating composition at a concentration in the range from 15 to 70% by weight, and in one embodiment from 15 to 35% by weight, and in one embodiment 20 to 30% by weight.

The aluminum salt (iii) may be an aluminum oxide, aluminum hydroxide, aluminum halide, aluminum nitrate, aluminum phosphate, aluminum sulfate, or a mixture of two or more thereof. A suitable aluminum halide may be aluminum chloride. In one embodiment, the aluminum salt may be an aluminum hydroxide. In one embodiment, the aluminum salt may be an aluminum phosphate. A suitable aluminum phosphate may be mono-aluminum phosphate ($Al(H_2PO_4)_3$), which is sometimes referred to as MALP, MAP or ADP, and which is commonly available as a 50% by weight aqueous solution. In one embodiment, the MALP solution may be present in the pretreating composition at a concentration of 37 to 52% by weight. Suitable aluminum salts also include aluminum salts that form an aluminum phosphate in response to outside stimulus, such as heating. The aluminum salt may be present in the pretreating composition at a concentration in the range from 10 to 50% by weight, and in one embodiment from 15 to 30% by weight.

The cation of the additional salt (iv) may be an alkaline earth metal, a transition metal, a main group element or metal, a multivalent non-metallic element, or a mixture of two or more thereof. The term "transition metal" is used herein to refer to elements or metals characterized by partially filled d-shells while the term "main group element" is used herein to refer to elements or metals with filled d-shells. These definitions are based on zero valent metallic states as well as ionic states. An element such as iron may be classified as a transition metal. Aluminum and lead may be classified as main group elements. Fe, Mn, or mixtures thereof, are examples of transition metals that may be used. Al, Zn, Cd, Sn, or mixtures of two or more thereof, are examples of main group elements that may be used. Examples of the multivalent non-metallic elements include boron. The alkaline earth metal may be calcium, magnesium, strontium, barium, or a mixture of two or more thereof. In one embodiment, the cation may be an alkaline earth metal, boron, iron, manganese, tin, zinc, or a mixture of two or more thereof. The anion for the additional metal salt may be an inorganic anion such as an oxide, hydroxide, phosphate, halide, sulfate or nitrate, or an organic anion such as acetate. In one embodiment, the additional metal salt may be an alkaline earth metal salt such as an alkaline earth metal phosphate. In one embodiment, the additional metal salt may be a magnesium salt such as magnesium phosphate. In one embodiment, the additional metal salt may be an alkaline earth metal nitrate, an alkaline earth metal halide, an alkaline earth metal sulfate, an alkaline earth metal acetate, or a mixture of two or more thereof. In one embodiment, the additional metal salt may be magnesium nitrate, magnesium halide, magnesium sulfate, or a mixture of two or more thereof. In one embodiment, the additional metal salt may comprise: magnesium oxide and/or magnesium phosphate; and a magnesium nitrate, magnesium halide, magnesium sulfate, or a mixture of two or more thereof.

The additional metal salt (iv) may be selected with reference to its compatibility with other ingredients in the pretreating composition. Compatibility may include metal phosphates that do not precipitate, flocculate, agglomerate, react to form undesirable species, or settle out prior to application of the pretreating composition to the carbon-carbon composite. The phosphates may be monobasic ($H_2PO_4^-$), dibasic ($HPO_4^{-2}$), or tribasic ($PO_4^{-3}$). The phosphates may be hydrated. Examples of alkaline earth metal phosphates that may be used include calcium hydrogen phosphate (calcium phosphate, dibasic), calcium phosphate tribasic octahydrate, magnesium hydrogen phosphate (magnesium phosphate, dibasic), magnesium phosphate tribasic octahydrate, strontium hydrogen phosphate (strontium phosphate, dibasic), strontium phosphate tribasic octahydrate and barium phosphate.

In one embodiment, a chemical equivalent of the additional metal salt (iv) may be used as the additional metal salt. Chemical equivalents include compounds that yield an equivalent (in this instance, an equivalent of the additional metal salt) in response to an outside stimulus such as, temperature, hydration, or dehydration. For example, equivalents of alkaline earth metal phosphates may include alkaline earth metal pyrophosphates, hypophosphates, hypophosphites and orthophosphites. Equivalent compounds include magnesium and barium pyrophosphate, magnesium and barium orthophosphate, magnesium and barium hypophosphate, magnesium and barium hypophosphite, and magnesium and barium orthophosphite.

While not wishing to be bound by theory, it is believed that the addition of multivalent cations, such as alkaline earth metals, transition metals and nonmetallic elements such as boron, to the pretreating composition enhances the hydrolytic stability of the metal-phosphate network. In general, the hydrolytic stability of the metal-phosphate network increases as the metal content increases, however a change from one metallic element to another may influence oxidation inhibition to a greater extent than a variation in the metal-phosphate ratio. The solubility of the phosphate compounds may be influenced by the nature of the cation associated with the phosphate anion. For example, phosphates incorporating monovalent cations such as sodium orthophosphate or phosphoric acid (hydrogen cations) are very soluble in water while tribarium orthophosphate is insoluble. Phosphoric acids can be condensed to form networks but such compounds tend to remain hydrolytically unstable. Generally, it is believed that the multivalent cations link phosphate anions creating a phosphate network with reduced solubility. Another factor that may influence hydrolytic stability is the presence of -P-O-H groups in the condensed phosphate product formed from the oxidation inhibiting composition during thermal treatment. The pretreating composition may be formulated to minimize concentration of these species and any subsequent hydrolytic instability. Whereas increasing the metal content may enhance the hydrolytic stability of a pretreating composition, it may be desirable to strike a balance between composition stability and effectiveness as an oxidation inhibitor. Hydrolytic stability may also be enhanced by introducing $P \equiv N$ or phosphonitrile moieties in place of -P-O-H groups. This may be accomplished by curing the oxidation-inhibiting composition in a nitrogen atmosphere at high temperatures. The presence of ammonium groups during such a curing process may further increase the concentration of phosphonitrile groups.

The optional additional metal salt (iv) may be present in the pretreating composition at a concentration in the range up to 30% by weight, and in one embodiment from 0.5 to 30% by weight, and in one embodiment from 0.5 to 25% by weight, and in one embodiment from 5 to 20% by weight. In one embodiment, a combination of two or more additional metal salts may be present at a concentration in the range from 10. to 30% by weight, and in one embodiment from 12 to 20% by weight.

In one embodiment, the pretreating composition may include an aluminum salt and a metal phosphate composition wherein the metal phosphate composition includes an alkaline earth metal phosphate or its chemical equivalent.

In one embodiment, the pretreating composition may include an aluminum phosphate and a metal phosphate composition, which may include an alkaline earth metal phosphate.

The relative amounts of (ii) phosphoric acid and/or acid phosphate salt, (iii) aluminum salt, and (iv) the optional additional metal salt, may be expressed without taking into account the presence of (i) water or other diluents. For example, the phosphoric acid or acid phosphate salt may be present in an amount of at least 25% by weight of the combined total weight of (ii), (iii) and (iv). The phosphoric acid or acid phosphate salt may be present in an amount up to 55% by weight of the total of (ii), (iii) and (iv). The aluminum salt may be present at a concentration of at least 25% by weight of the total of (ii), (iii) and (iv). The aluminum salt may be present at a concentration up to 55% by weight of the total of (ii), (iii) and (iv). The optional additional metal salt may be present in an amount of at least 4% by weight of the total of (ii), (iii) and (iv). The optional additional metal salt may be present at a concentration up to 40% by weight of the total of (ii), (iii) and (iv).

In one embodiment, the pretreating composition may have a weight ratio of the additional metal to aluminum of 0.5 to 5, and in one embodiment from 0.8 to 3, and in one embodiment from 1 to 2.

In one embodiment, the pretreating composition may have a metal to phosphate atomic ratio of 0.26 to 0.50, and in one embodiment from 0.32 to 0.48, and in one embodiment from 0.32 to 0.45, and in one embodiment from 0.35 to 0.42. In one embodiment, the ratio may be from 0.40 to 0.48.

The pretreating composition may contain a relatively increased amount of the additional metal (e.g., alkaline earth metal, transition metal, boron) to adjust the metal to phosphorus ratio to be within the above-indicated range. In one embodiment, the pretreating composition may include a metal halide such as magnesium chloride, which may be provided as magnesium chloride hexahydrate. In one embodiment, the pretreating composition may contain from 5 to 15% by weight metal halide. In one embodiment, the pretreating composition may include a metal nitrate such as magnesium nitrate, which may be provided as magnesium nitrate hexahydrate. In one embodiment, the pretreating composition may contain from 10 to 25% by weight metal nitrate. In one embodiment, the amount of the additional metal may be increased by an amount in the range from 5 to 20% by weight based on the weight of the pretreating composition by adding the foregoing metal halide or metal nitrate to the pretreating composition.

In one embodiment, the pretreating composition may include an oxidizing agent such as nitric acid or a nitrate salt. The pretreating composition may include nitric acid or a nitrate salt at a concentration in the range up to about 10% by weight. While not wishing to be bound by theory, it is believed that the addition of an oxidizing agent such as nitric acid or a nitrate salt may enhance bonding of the pretreating composition to the carbon-carbon composite by inducing polarity at the interface of the carbon-carbon composite and the pretreating composition. Adhesion may also be enhanced by pretreatment of the carbon-carbon composite substrate to create, modify or add compatible functionalties.

The pretreating composition may include boron. In one embodiment, the pretreating composition includes boron at a concentration in the range of up to 20% by weight. In one embodiment, the pretreating composition may include boric acid at a concentration in the range from 2 to 20% by weight, and in one embodiment 10% by weight.

In one embodiment, the pretreating composition may include a wetting agent. The wetting agent may be a polyol, an alkoxylated monohydric alcohol, a silicone surfactant, or a mixture of two or more thereof. Any of the wetting agents discussed above for use in the oxidation inhibiting composition may be used. The wetting agent may be present in the pretreating composition at a concentration of up to 5% by weight, and in one embodiment from 0.01 % by weight to 5% by weight, and in one embodiment from 0.1 to 3% by weight, and in one embodiment from 0.3 to 1% by weight of the total weight of the pretreating composition.

The pretreating composition may be made by blending together phosphoric acid or the acid phosphate salt with water. The aluminum salt may then be added followed by the additional metal salt. The wetting agent, when used, may be added to the above mixture. In one embodiment, between each addition step, the components may be mixed ultrasonically or by stirring at ambient temperature and pressure.

In one embodiment, the pretreating composition may be applied to non-wearing surfaces of a carbon-carbon composite that may be exposed to oxidation. These non-wearing surfaces may include the back face of the end plates of a brake stack, and drive areas, an inner diameter (ID) surface of a stator and a lug, and an outer diameter (OD) surface of a rotor in the brake stack.

The oxidation-inhibiting composition can be dispersed effectively throughout a carrier fluid using ultrasonic irradiation, wet ball milling, an attritor ball mill or combinations thereof. Dispersion can also be enhanced by controlling the zeta potential of the carrier fluid, suspension or solution. Suspending agents may also be added as desired. The particle size of the glass frit can also be reduced by jet milling, dry ball milling, wet ball milling, attritor milling, cryogenic milling, friction grinding, turbo milling, and the like.

The following Tables 13-17 disclose Examples 50-75 herein pretreating compositions that may be used in accordance with the invention are disclosed. In these tables, all numerical values are in parts by weight, and the metal: phosphate (or $PO_4$) ratio is a weight/weight ratio.

Table 13

| Ingredients | Ex.50 | Ex.51 | Ex.52 | Ex.53 | Ex.54 | Ex.55 |
|---|---|---|---|---|---|---|
| $H_2O$ | 10.00 | 10.00 | 10.00 | 85.00 | 10.00 | 10.00 |
| 85% $H_3PO_4$ | 29.50 | 29.50 | 29.50 | - | 29.50 | 29.50 |
| $(NH_4)H_2PO_4$ | - | - | - | 34.00 | - | - |
| MALP(50% aqueous) | 48,00 | 48.00 | 48.00 | 48.00 | 48.00 | 48.00 |
| $Mg_3(PO_4)_3 \cdot 8H_2O$ | 10.00 | 22.00 | 30.00 | 22.00 | - | - |
| $SnCl_4 \cdot 5H_2O$ | - | - | - | - | 33.20 | - |
| $Fe(NO_3)_3 \cdot 9H_2O$ | - | - | - | - | - | 37.70 |
| Ingredients | Ex. 50 | Ex.51 | Ex. 52 | Ex. 53 | Ex.54 | Ex. 55 |
| BYK-346 | 0.50 | 0.50 | 0.50 | - | 0.50 | 0.50 |
| Metal:phosphate* | 0.281 | 0.402 | 0.471 | 0.377 | 0.353 | 0.350 |
| Humidity Gain @ 168 hrs-40.6°C (105°F)/95% RH | 15.0% | 3.0% | <1.0% | 1.0% | 4.0% | 1.0% |
| Oxidation Loss @ 649°C (1200°F) - 30 hrs | 2.9% | 5.3% | 7.7% | 3.0% | 3.5% | 4.0% |

Table 14

| Ingredients | Ex.56 | Ex.57 | Ex.58 | Ex.59 | Ex. 60 | Ex. 61 |
|---|---|---|---|---|---|---|
| $H_2O$ | 10.22 | 10.22 | 10.22 | 5.11 | 7.67 | 7.67 |
| 85% $H_3PO_4$ | 30.18 | 30.18 | 30.18 | 30.18 | 24.14 | 36.22 |
| MALP (50% aqueous) | 50.44 | 50.44 | 50.44 | 50.44 | 40.35 | 40.35 |
| $Mg_3(PO_4)_3 \cdot 8H_2O$ | 8.66 | 8.66 | 8.66 | 8.66 | 10.39 | 6.93 |
| $MgCl_2 \cdot 6H_2O$ | - | 11.11 | 11.11 | 11.11 | 13.33 | 8.89 |
| $Mg(NO_3)_2 \cdot 6H_2O$ | 11.11 | - | - | - | - | - |
| $HNO_3$ | - | - | 7.80 | 5.85 | 5.85 | 5.85 |

(continued)

| Ingredients | Ex.56 | Ex.57 | Ex.58 | Ex.59 | Ex. 60 | Ex. 61 |
|---|---|---|---|---|---|---|
| BYK-346 | 0.50 | 0.50 | 0.50 | 0.50 | 0.50 | 0.50 |
| Metal: phosphate* | 0.340 | 0.365 | 0.365 | 0.365 | 0.456 | 0.294 |
| Humidity Gain @ 360 hrs-(**240hrs.)-40.6°C (105-F)195% RH | **2.13% | **0.91% | 0.40% | 0.08% | 0.03% | 9.28% |
| Oxidation Loss @ 676.7°C (1200°F) (649°C (*1200°F) - 30 hrs. | *6.2% | *8.6% | 14.9% | 17.1% | 23.2% | 13.7% |

Table 15

| Ingredients | Ex. 62 | Ex. 63 | Ex. 64 | Ex. 65 | Ex. 66 | Ex.67 |
|---|---|---|---|---|---|---|
| $H_2O$ | 7.67 | 7.67 | 7.67 | 10.22 | 10.22 | 10.22 |
| 85% $H_3PO_4$ | 36.22 | 24.14 | 24.14 | 30.18 | 30.18 | 26.84 |
| MALP (50% aqueous) | 40.35 | 60.53 | 40.35 | 50.44 | 50.44 | 50.44 |
| $Mg_3(PO_4)_3 \cdot 8H_2O$ | 10.39 | 6.93 | 6.93 | 8.66 | 8.66 | 8.66 |
| $MgCl_2 \cdot 6H_2O$ | 8.89 | 8.89 | 8.89 | 8.33 | 8.33 | 11.11 |
| $ZnCl_2$ | - | - | - | 1.86 | - | - |
| $MnCl_2 \cdot 4H_2O$ | - | - | - | - | 2.70 | - |
| $LaCl_3 \cdot 7H_2O$ | - | - | - | - | - | 5.00 |
| $HNO_3$ | 5.85 | 5.85 | 5.85 | 7.80 | 7.80 | 7.80 |
| BYK-346 | 0.50 | 0.50 | 0.50 | 0.50 | 0.50 | 0.50 |
| Metal: phosphate* | 0.331 | 0.359 | 0.365 | 0.365 | 0.365 | 0.412 |
| Humidity Gain @ 360 hrs.- 40.6°C (105-F)/95% RH | 1.68% | 0.15% | 0.14% | 0.40% | 0.39% | 0.06% |
| Oxidation Loss @ 676.7°C (1250°F) - 30 hrs. | 13.8% | 15.9% | 14.8% | 18.2% | 18.3% | 15.7% |

Table 16

| Ingredients | Ex. 68 | Ex. 69 | Ex. 70 | Ex. 71 |
|---|---|---|---|---|
| $H_2O$ | - - | 15.00 | 15.00 | 20.00 |
| $H_3PO_4$ (8596) | 30.18 | 53.19 | 53.19 | 53.19 |
| MALP (50% aqueous) | 50.44 | - - | - - | - - |
| $Al(OH)_3$ | - - | 6.26 | 6.26 | 6.26 |
| $Mg_3(PO_4)_2 \cdot 8H_2O$ | 8.66 | - - | - - | - - |
| $MgCl_2 \cdot 6H_2O$ | 11.11 | - - | - - | - - |
| MgO | - - | 4.95 | 4.95 | 4.95 |
| $HNO_3$ | 5.85 | 5.85 | 5.85 | 1.00 |
| Surfynol 485 | - - | 1.00 | 0.75 | 0.75 |
| BYK-346 | 0.50 | - - | - - | - - |
| Metal: phosphate* | 0.365 | 0.416 | 0.416 | 0.416 |

Table 17

| Ingredients | Ex. 72 | Ex. 73 | Ex. 74 | Ex. 75 |
|---|---|---|---|---|
| $H_2O$ | - - | 15.00 | 15.00 | 15.00 |
| $H_3PO_4$ (85%) | 30.18 | 53.19 | 48.28 | 53.19 |
| MALP (50% aqueous) | 50.44 | - - | - - | - - |
| $Al(OH)_3$ | - - | 6.26 | 6.26 | 6.26 |
| $Mg_3(PO_4)_2 \cdot 8H_2O$ | 8.66 | -- | 8.66 | - - |
| $MgCl_2 \cdot 6H_2O$ | 11.11 | - - | 11.11 | 11.11 |
| MgO | - - | 4.95 | - - | 2.57 |
| $HNO_3$ | 5.85 | 5.85 | 5.85 | 5.85 |
| Surfynol 485 | - - | - - | - - | - - |
| BYK-346 | - - | 0.50 | 0.50 | 0.50 |
| Metal: phosphate* | 0.365 | 0.416 | 0.416 | 0.416 |
| *The metal:phosphate calculation assumes a 50% aqueous solution of monoaluminum phosphate. Concentrations exceeding 50% MALP will result in an actual metal to phosphate ratio higher than calculated. | | | | |

The following Table 18 discloses Examples 76-80 which are pretreating compositions that can be used in accordance with the inventive method. In Examples 77-79, MALP is formed in situ by mixing $Al(OH)_3$ with $H_3PO_4$. In Table 18 all numerical values are in parts by weight, and the metal:$PO_4$ ratio is a weight/weight ratio.

Table 18

| Ingredient | Ex.76 | Ex. 77 | Ex. 78 | Ex. 79 | Ex. 80 |
|---|---|---|---|---|---|
| $H_2O$ | - - | 16.00 | 8.00 | 12.00 | - - |
| $H_3PO_4$ (85%) | 25.16 | 57.62 | 57.62 | 57.62 | 30.18 |
| MALP (50% aqueous) | 59.35** | - - | - - | - - | 50.44*** |
| $Al(OH)_3$ | -- | 6.18 | 6.18 | 6.18 | -- |
| $Mg_3(PO_4)_2 \cdot 8H_2O$ | 8.66 | 8.66 | 8.66 | 8.66 | 8.66 |
| $MgCl_2 \cdot 6H_2O$ | 11.11 | 11.11 | 11.11 | - - | - - |
| MgO | - - | - - | - - | 2.21 | 2.21 |
| $HNO_3$ | 5.85 | 5.85 | 2.93 | 5.85 | 5.85 |
| Metal: phosphate* | 0.392 | 0.365 | 0.365 | 0.365 | 0.365 |
| *The metal:phosphate calculation assumes a 50% aqueous solution of monoaluminum phosphate. Concentrations exceeding 50% MALP will result in an actual metal to phosphate ratio higher than calculated.<br>** MALP supplied by Alfa Aesar.<br>***MALP supplied by Rhodia. | | | | | |

In the one embodiment, a particulate material, for example, glass particulates, inorganic compounds and/or other particulate materials may be used to retard penetration into the carbon-carbon composite. The particulate material may be mixed with the pretreating composition, or it may be applied to the carbon-carbon composite surface prior to the application of the pretreatng composition. In one embodiment, the pretreating composition may not be used and the particulate material may be applied to the carbon-carbon composite surface prior to the application of the oxidation inhibiting composition. The particulate material may be used to limit the depth of penetration upon application of the pretreating composition and/or limit migration of the pretreating composition components due to environmental factors. These environmental factors may include humidity, temperature excursions, spills, etc. The particulate material may comprise glass particulates. The glass particulates may be made from any of the glass compositions discussed above. The particulate material may comprise one or more metal oxides. The particulate material may comprise one or more alumina, silica, zirconia, magnesia, calcium oxide, and the like. The particulate material may comprise one or more aluminum phosphates, aluminates, silicates, phosphates, graphites, carbon blacks, metal carbides, borides, and the like. Mixtures of two or more of the foregoing may be used. The particulates may have a mean particle size in the range up to 300 $\mu$m and in one embodiment in the range from 2 nanometers (nm) to 300$\mu$m, and in one embodiment from 10 nm to 150 $\mu$m. Particulates that react readily with the pretreating composition may be applied separately, typically as slurry. Particulates that do not react readily or are inert toward the pretreating composition may be applied prior to the application of the pretreating composition as a pretreatment or added directly to the pretreating composition. When added to the pretreating composition, the concentration of the particulate material in the pretreating composition may be in the range up to 30% by weight, and in one embodiment, in the range from 0.5 to 30% by weight, and in one embodiment from 2 to 20% by weight. When applied directly to the carbon-carbon-carbon composite as a pretreatment, the particulate material may be applied as an aqueous slurry to provide a solids treatment level in the range up to 20 mg/cm$^2$, and in one embodiment in the range from 0.01 to 20 mg/cm$^2$, and in one embodiment from 1 to 10 mg/cm$^2$.

The following Examples 81-83 disclose aqueous slurries of particulate material that may be applied to the surface of the carbon-carbon composite as a pretreatment prior to applying the pretreating composition, or when the pretreating composition is not used, prior to applying the oxidation inhibiting composition.

Example 81

A particulate slurry is prepared by combining 95 grams of deionized water and 5 grams of aluminum orthophosphate (Alfa Aesar, Ward Hill MA) and agitating ultrasonically. Alternatively, the slurry may be mixed by ball milling and/or by enhanced ball milling (using an attritor).

Example 82

A particulate slurry is prepared by combining 95 grams of deionized water and 5 grams of alumina (Microlux-RZ, 0.05 $\mu$m, Meller Optics Inc., Providence RI) and agitating ultrasonically. Alternatively, the slurry may be mixed by ball milling and/or by enhanced ball milling (using an attritor).

Example 83

A particulate slurry is prepared by combining 72 grams of deionized water and 8 grams of Nanobyk-3600 (BYK-Chemie USA, Wallingford CT) and agitating. This slurry contains a loading of approximately 5% by weight $Al_2O_3$ nano-particles available under the name NanoDur® (Nanophase Technologies Corporation, Romeoville, IL).

Large (2.54 cm x 5.08 cm x 7.62 cm (1" x 2" x 3")) oxidation coupon blocks are cut and prepared from a

DURACARB® stator. The slurries from Examples 81-83 are applied by brush and then dried 10 minutes at 400°F (204.4°C). The pretreating compositions of Examples 72, 73 and 75, all prepared without surfactant, are then applied by brush and baked. The coupon blocks are then halved longitudinally with one portion placed in a desiccator and the other portion placed in a humidity chamber at 105°F (40.6°C) and 95% RH for ten days. At the conclusion of the humidity exposure, all samples are then heated to 1250°F (676.7°C) in flowing air. The samples are removed and examined periodically. The area of the carbon substrate infiltrated with the pretreating composition oxidizes at a much slower rate than the areas not infiltrated with the pretreating composition. As the carbon-carbon composite coupon oxidizes the areas infiltrated by the pretreating composition are apparent typically by the absence or a reduced level of carbon loss. The length of this region is measured along the width and thickness of the coupon and averaged. The mean measurement is recorded as the depth of penetration for that sample.

Table 19 below summarizes the effect of particulate addition on pretreating composition component depth of penetration, both with and without humidity exposure, as well as migration. In general, higher viscosity pretreating compositions do not penetrate as much as lower viscosity pretreating compositions. The level of nitrate concentration also influences the depth of penetration. When a carbon-carbon composite is pretreated with a particulate slurry of either $AlPO_4$ (Example 81) or $Al_2O_3$ (Example 83), the depth of penetration is reduced as much as 60%. The larger particle size $AlPO_4$ (Example 81) appears to be more effective in limiting depth of penetration than the Nanobyk-3600 (Example 83). In this example, however, after a 10-day exposure at 105°F(40.6°C)/95% RH, the Nanobyk-3600 (Example 94) treated coupons show a reduced degree of pretreating composition movement due to humidity exposure. The combination of Nanobyk-3600 (Example 83) and the higher viscosity, chloride-free pretreating composition of Example 73 exhibits the lowest degree of migration after humidity exposure.

Table 19

| Particulate Pretreatment | Pretreating Composition | Depth of penetration | | migration |
|---|---|---|---|---|
| | | Without humidity exposure | 10-day humidity exposure | |
| | | cm | | |
| Example 81 | Ex. 72 | 0.20 | 0.80 | 0.60 |
| Example 81 | Ex. 75* | 0.40 | 1.10 | 0.70 |
| Example 81 | Ex. 73* | 0.30 | 0.50 | 0.20 |
| Example 83 | Ex. 72 | 0.50 | 1.00 | 0.50 |
| Example 83 | Ex. 75* | 0.50 | 0.80 | 0.30 |
| Example 83 | Ex. 73* | 0.20 | 0.40 | 0.20 |
| No particulate pretreatment | Ex. 72 | 0.50 | 2.50 | 2.00 |
| No particulate pretreatment | Ex. 75* | 0.60 | 1.50 | 0.90 |
| No particulate pretreatment | Ex. 73* | 0.30 | 1.40 | 1.10 |
| * without surfactant | | | | |

The following examples are illustrative of the inventive method wherein a pretreating composition is applied to a carbon-carbon composite followed by application of an oxidation inhibiting composition.

Example 85

The pretreating composition is prepared by mixing 48 parts by weight MALP (50% aqueous solution), 29.5 parts by weight phosphoric acid, 10 parts by weight distilled water, 8.3 parts by weight magnesium phosphate tribasic octahydrate, and 0.5 parts by weight BYK 346. The pretreating composition is stirred and warmed until clear.

The oxidation inhibiting composition is the same as the oxidation inhibiting composition from Example 20.

Oxydation test coupon are prepared from a DURACARB® heat sink material by machining 2.54 cm (1") square by 0.635 cm (¼") thick coupons radially from either the OD surface of stators or else the ID surface of rotors. Each coupon is dimensioned and weighed. The density and amount of open porosity are measured using a wet-dry method with mineral spirits. Test coupons are impregnated with the pretreating composition by immersing the coupon for up to two minutes and then drying on a cardboard sheet Each impregnated coupon is heated to 1400°F (760°C) in flowing nitrogen for 2 hours to remove water and to form a phosphate network on the carbon-carbon composite surface. The coupons are inhibited by applying each with either two or four applications of the above-indicated oxidation inhibiting composition and then baking each coupon at 1400°F (760°C) for 2 hours before each new application.

Fig. 1 is an optical micrograph at a magnification of 200X showing the above-indicated treated carbon-carbon composite with deposits from the pretreating composition (phosphate undercoating) in the pores of the carbon-carbon composite and underlying the phosphate glass layer (glass barrier).

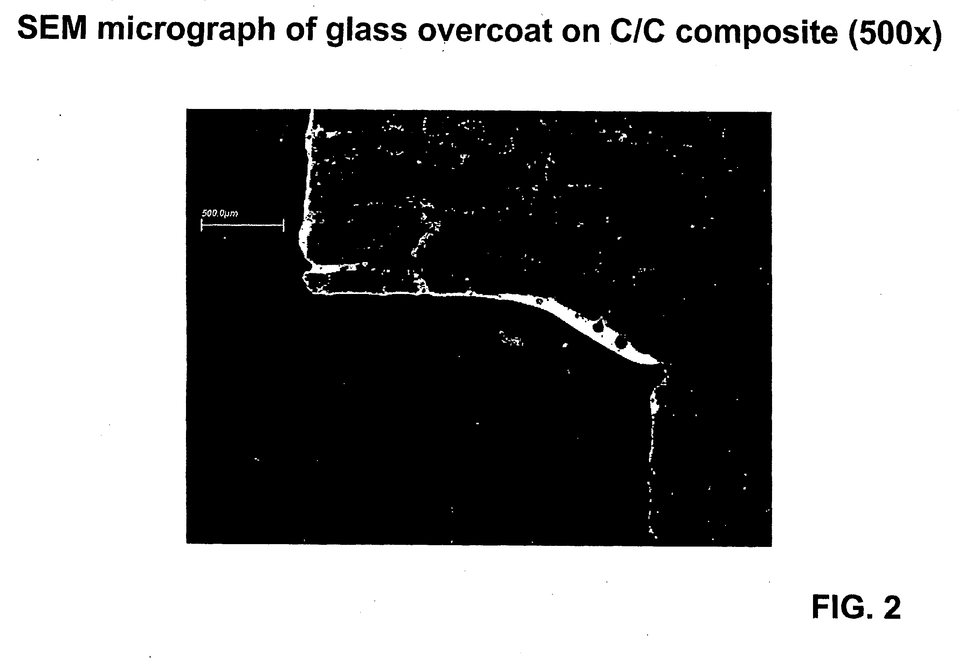

Fig. 2 is an SEM micrograph at a magnification of 500X of the above-indicated treated carbon-carbon composite. Fig. 2 represents a back scattering image from the SEM. The bright (white) barrier layer is the phosphate glass layer (glass overcoat) resulting from the application of the oxidation inhibiting composition. The bright (white) deposits beneath the barrier layer are formed as a result of the application of the pretreating composition (phosphate undercoating).

Oxidation tests are performed at 1200°F (648.9°C) in air for up to 30 hours. Oxidation coupons are placed on alumina rods and inserted into a furnace in an air atmosphere flowing at 6000 standard cubic centimeters per minute. The coupons are removed from the furnace and weighed after 1, 2, 4, 8, 24, and 30 hours of oxidation. Carbon weight loss is calculated using the formula indicated in Example 20. The results are shown in the following Table 20:

Table 20

| Coats of Oxidation Inhibitor | Oxidation Screening Tests (Percent Carbon Weight Loss after 30 hours at 1250°F (676.7°C) in Air) |
|---|---|
| 2 coats | 1.56 |

(continued)

| Coats of Oxidation Inhibitor | Oxidation Screening Tests (Percent Carbon Weight Loss after 30 hours at 1250°F (676.7°C) in Air) |
| --- | --- |
| 4 coats | 0.55 |

The pretreating compositions identified in Table 21 are prepared (all numerical values being in parts by weight):

Table 21

| Ingredient | Example 86 | Example 87 | Example 88 | Example 89 |
| --- | --- | --- | --- | --- |
| $H_2O$ | 19.00 | 12.22 | 10.00 | 10.00 |
| $H_3PO_4$ (85%) | 20.00 | 30.18 | 29.50 | 29.50 |
| MALP (50% aqueous) | 60.00 | 50.44 | 48.00 | 48.00 |
| $Zn_3(PO_4)_2 \cdot xH_2O$ | - - | - - | 12.00 | - - |
| $Mg_3(PO_4)_2 \cdot 8H_2O$ | - - | 8.66 | - - | 8.30 |
| $MgCl_2 \cdot 6H_2O$ | - - | 11.11 | -- | -- |
| $HNO_3$ (69%) | - - | 5.85 | - - | - - |
| BYK-346 | - - | 0.50 | 0.50 | 0.50 |
| Surfynol 440 | 1.00 | - - | - - | - - |

The following oxidation inhibiting compositions are prepared (all numerical values being in parts by weight):

| Ingredient | Example 90 | Example 91 |
| --- | --- | --- |
| Glass No. 1 (Example 6) | 37.0 | - - |
| Glass No. 2 (Example 7) | - - | 37.0 |
| Water | 50.0 | 50.0 |
| $NH_4H_2PO_4$ | 13.0 | 13.0 |

Glass Nos. 1 and 2 are alkali borophosphate glass powders prepared as described in Examples 6 and 7, respectively. The nominal composition for each glass is as follows (all numerical values being in percent by weight):

| Glass ID | Al | Ba | Li | Mg | B | P | O |
| --- | --- | --- | --- | --- | --- | --- | --- |
| No. 1 | 0.20 max | 3.2 | 2.5 | 2.1 | 1.1 | 34.5 | Balance |
| No. 2 | 1.2 | 4.0 | 2.4 | 2.2 | 1.2 | 35.0 | Balance |

Oxidation test coupons are prepared from a DURACARB® heat sink material 2.54 cm 0.635 cm by machining 2.54 cm (1") square by 0.635 cm (¼") thick coupons radially from either the OD surface of stators or else the ID surface of rotors. Each coupon is dimensioned and weighed. The density and amount of open porosity are measured using a wet-dry method with mineral spirits.

Test coupons are impregnated with the pretreating compositions from Examples 86, 87, 88, 89 by immersing the coupons for up to two minutes and then drying on a cardboard sheet for one hour. Test samples for humidity exposures are prepared by placing 3-4 grams of each liquid pretreating composition in a carbonized graphite crucible. Two crucibles for each sample are prepared. Each impregnated coupon is heated to 1450°F (787.8°C) in flowing nitrogen for 2 hours to remove water and to form a glass network on the carbon-carbon composite surface.

Test coupons are inhibited by applying two applications of the above-indicated oxidation inhibiting compositions from Example 90 or Example 91 and then baking each coupon at 1450°F (787.8°C) for 2 hours after each application.

Example 92

Duplicate oxidation test coupons are inhibited by first impregnating each coupon with pretreating composition from Example 87 by immersing the coupon for up to two minutes and then drying at room temperature on a cardboard sheet for one hour, oven drying at 175°F (79.4°C) for 3 hours, and then applying two applications of the glass inhibiting composition from Example 91 and heating each coupon at 1450°F (787.8°C) for 2 hours after each application.

Example 93

Duplicate coupons are also prepared and tested that are first impregnated with pretreating composition from Example 87 as described above and subsequently baked at 1450°F (787.7°C) for 2 hours before applying two applications of the glass inhibiting composition from Example 91 and heating each coupon at 1450°F (787.8°C) for 2 hours after each application

Example 94

Duplicate oxidation test coupons are inhibited by first impregnating each coupon with pretreating composition from Example 87 by immersing the coupon for up to two minutes and then drying at room temperature on a cardboard sheet for one hour, oven drying at 175°F (79.4°C) for 3 hours, and then applying two applications of the glass inhibiting composition from Example 90 and heating each coupon at 1450°F (787.8°C) for 2 hours after each application.

Example 95

Duplicate coupons are also prepared and tested that are first impregnated with pretreating composition from Example 87 as described above and subsequently baked at 1450°F (787.7°C) for 2 hours before applying two applications of the glass inhibiting composition from Example 90 and heating each coupon at 1450°F (787.8°C) for 2 hours after each application.

Humidity exposures are performed on test samples by placing them in a humidity cabinet at 40°C and at 95% relative humidity for up to 15 days. The weight of each crucible is measured at least twice a day. Weight change of the oxidation inhibitor resulting from the adsorption of water molecules is calculated with respect to time using Formula (I) in Example 20.

Oxidation tests are performed at 1250 °F (676.7°C) in air for up to 30 hours. Oxidation coupons are placed on alumina rods and inserted into a Rapid Temp furnace in an air atmosphere flowing at 6000 standard cubic centimeters per minute. The coupons are removed from the furnace and weighted after 1, 2, 4, 8, 24 and 30 hours of oxidation. Carbon weight loss is calculated using Formula (II) in Example 20.

The results of these tests are summarized in Table 22.

Table 22

| Inhibitor System | Oxidation Screening Tests (Percent Carbon Weight Loss after 30 hours at 676.6°C (1250°F) in air) | Humidity Exposure Tests (% weight gain) | Depth of Penetration Measurements (cm) |
|---|---|---|---|
| Example 86 | 10.9 | 1-3 | 0.8 |
| Example 88 | 8.81 | >100 | -- |
| Example 89 | 8.62 | 10-20 | - - |
| Example 87 | 9.05 | 0.2-0.4 | 0.6 |
| Example 90 | 4.16 | 1.2-1.5 | 0.15 |
| Example 91 | 3.46 | 0.2-0.6 | 0.15 |
| Example 95 | 1.61 | - - | 0.8 |
| Example 93 | 1.24 | 2-4 | 0.8 |
| Example 94 | - - | - - | 0.8 |
| Example 92 | -- | 0.5-1.0 | 0.8 |

Carbon-carbon coupons treated as described in Examples 92-94 are prepared for microstructural examination and thickness measurements. Each sample is sectioned using a low-speed diamond saw, mounted in epoxy, ground and polished, and examined using a Leica light optical microscope. The thickness of the oxidation inhibiting layer is measured between 5.08 and 20.32 $\mu$m (0.2 and 0.8 mils) independent of the number of applications. The uniformity of the surface of the oxidation inhibiting layer is improved with increasing applications, creating a barrier or sealant to the ingress of molecular oxygen.

The oxidation test results disclosed in Table 22 indicate that the oxidation inhibiting composition (prepared according to Example 90 or 91) is a more efficient barrier and sealant compared with a pretreatment composition alone (Examples 86-89). However, the oxidation inhibiting composition applied over the pretreatment composition (Examples 92-95) is superior to the oxidation inhibiting composition alone (Examples 90-91).

The oxidation inhibiting composition and optionally the pretreating composition may provide protection to the carbon-carbon composite by reducing carbon loss due to oxidation. The inventive method may be used to provide an extended service life for carbon-carbon composites by reducing oxidation, and in particular, catalyst-accelerated internal oxidation.

The inventive method may be used to treat articles that may be useful in aircraft brakes. The brakes may operate at temperatures in the range from

100° to 700°C during normal service. Where embodiments of this invention are used in conjunction with a barrier coating, operation temperatures may be in the range from 100°C to 900°C. Commercial aircraft brakes operate most of the time at relatively lower temperatures, for example, temperatures in the range from 400°C to 600°C, and such aircraft brakes treated in accordance with the invention may be operated in this range.

In one embodiment, the inventive method may extend the service life of carbon-carbon composites by preventing catalyst-accelerated, internal oxidation. In order to protect carbon-carbon composites from rapid oxidation by catalysis from Na, K, Ca, Cu, Fe, V or other metals in contaminating liquids encountered during service or as residual material in the carbon-carbon composite, the pretreating composition may be distributed throughout the pores to a depth sufficient to cover the range affected by $O_2$ diffusing in from exposed surfaces (1 cm). In one embodiment, the pretreating composition may be uniformly distributed in the pores, e.g. with not more than 1 mm separation between deposits. Deposits from the pretreating composition may be at a depth sufficient to provide oxidation protection to the carbon-carbon composites. The deposits may be at a depth from 3 to 9 mm, and in one embodiment from 4 to 8 mm, and in one embodiment from 5 to 7 mm.

The present invention provides a method for inhibiting the oxidation of carbon-carbon composites, and also provides articles produced according to the method. In particular, the present invention provides a method of reducing or eliminating oxidation, particularly internal oxidation, of carbon-carbon composite articles using the above-discussed oxidation inhibiting composition and optionally the above discussed pretreating composition. Carbon-carbon composite articles, such as aircraft brake pads, may be coated and/or passivated, thereby reducing or eliminating oxidizer infiltration, catalyst-enhanced oxidation, and/or degradation or loss of stability or integrity. Oxidation reduction or elimination, catalytic oxidation reduction or elimination, and/or internal stability or integrity enhancement may be accomplished in accordance with the present invention. The present invention may enhance the stability of carbon-carbon composites in oxidatively aggressive environments at elevated temperatures. Desirable properties of a carbon-carbon composite, such as uniformity and moisture resistance, may be enhanced. For articles, such as brakes, produced in accordance with the present invention, degradation of oxidation protection of wear and non-wear surfaces may be reduced and long-term stability may be enhanced.

**Claims**

1. A method of inhibiting oxidation of a carbon-carbon composite, comprising:

   (A) applying an oxidation inhibiting composition to a surface of the carbon-carbon composite, the oxidation inhibiting composition comprising particulate solids of at least one phosphate glass combined with at least one carrier liquid; and
   (B) heating the carbon-carbon composite from step (A) at a sufficient temperature to adhere the phosphate glass to the carbon-carbon composite.

2. The method of claim 1 wherein, prior to step (A), a pretreating composition is applied to the surface of the carbon-carbon composite, the pretreating composition comprising phosphoric acid and/or at least one acid phosphate salt, at least one aluminum salt, and optionally at least one additional salt, the carbon-carbon composite being porous, the pretreating composition penetrating at least some of the pores of the carbon-carbon composite.

3. The method of claim 2 wherein the metal to phosphate atomic ratio for the pretreating composition is in the range from 0.26 to 0.50.

4. The method of any one of claims 1-3 wherein prior to step (A), at least one particulate material is applied to the surface of the carbon-carbon composite.

5. The method of any one of claims 2 or 3 wherein prior to applying the pretreating composition to the surface of the carbon-carbon composite, at least one particulate material is applied to the surface of the carbon-carbon composite.

6. The method of any one of claims 2, 3, 4 or 5 wherein the pretreating composition further comprises at least one particulate material.

7. The method of any one of claims 4-6 wherein the particulate material comprises a glass, an aluminate, an aluminum phosphate, a silicate, a phosphate, a graphite, a carbon black, a metal oxide, a metal carbide, a boride, or a mixture of two or more thereof, the mean particle size of the particulate material being in the range up to 300 micrometers.

8. The method of any one of claims 4-7 wherein the particulate material comprises alumina particulates, the alumina particulates having a mean particle size in the range from 2 nanometers to 300 micrometers.

9. A composition comprising particulate solids of at least one phosphate glass and at least one carrier liquid; and (i) at least one ammonium phosphate, (ii) at least one metal phosphate, (iii) at least one refractory compound, (iv) at least one wetting agent, or (v) a mixture of two or more of (i) to (iv).

10. The composition of claim 9 wherein the refractory compound comprises aluminum orthophosphate, boron phosphate, manganese dioxide, spinel, aluminum nitride, boron nitride, silicon carbide, boron carbide, silicon nitride, titanium boride, zirconium boride, or a mixture of two or more thereof.

11. The composition of claims 9 or 10 wherein the phosphate glass comprises at least one borophosphate glass.

12. The composition of any one of claims 9-11 wherein the metal phosphate comprises aluminum orthophosphate, monoaluminum phosphate, or a mixture thereof.

13. The composition of any one of claims 9-12 wherein the ammonium phosphate comprises ammonium dihydrogen phosphate, ammonium hydrogen phosphate, or a mixture thereof.

**Patentansprüche**

1. Verfahren zum Hemmen der Oxidation eines Kohlenstoff-Kohlenstoff-Verbundwerkstoffs, umfassend:

   (A) Auftragen einer oxidationshemmenden Zusammensetzung auf eine Oberfläche des Kohlenstoff-Kohlenstoff-Verbundwerkstoffs, wobei die oxidationshemmende Zusammensetzung teilchenförmige Feststoffe aus wenigstens einem Phosphatglas in Kombination mit wenigstens einer Trägerflüssigkeit umfasst; und
   (B) Erhitzen des Kohlenstoff-Kohlenstoff-Verbundwerkstoffs aus Schritt (A) auf eine ausreichende Temperatur, um das Phosphatglas an dem Kohlenstoff-Kohlenstoff-Verbundwerkstoff haften zu lassen.

2. Verfahren gemäß Anspruch 1, wobei vor Schritt (A) eine Vorbehandlungszusammensetzung auf die Oberfläche des Kohlenstoff-Kohlenstoff-Verbundwerkstoffs aufgetragen wird, wobei die Vorbehandlungszusammensetzung Phosphorsäure und/oder wenigstens ein saures Phosphatsalz, wenigstens ein Aluminiumsalz und gegebenenfalls wenigstens ein zusätzliches Salz umfasst, wobei der Kohlenstoff-Kohlenstoff-Verbundwerkstoff porös ist, wobei die Vorbehandlungszusammensetzung in wenigstens einen Teil der Poren des Kohlenstoff-Kohlenstoff-Verbundwerkstoffs eindringt.

3. Verfahren gemäß Anspruch 2, wobei das Atomverhältnis von Metall zu Phosphat für die Vorbehandlungszusammensetzung im Bereich von 0,26 bis 0,50 liegt.

4. Verfahren gemäß einem der Ansprüche 1 bis 3, wobei vor Schritt (A) wenigstens ein teilchenförmiges Material auf die Oberfläche des Kohlenstoff-Kohlenstoff-Verbundwerkstoffs aufgetragen wird.

**5.** Verfahren gemäß einem der Ansprüche 2 oder 3, wobei vor dem Auftragen der Vorbehandlungszusammensetzung auf die Oberfläche des Kohlenstoff-Kohlenstoff-Verbundwerkstoffs wenigstens ein teilchenförmiges Material auf die Oberfläche des Kohlenstoff-Kohlenstoff-Verbundwerkstoffs aufgetragen wird.

**6.** Verfahren gemäß einem der Ansprüche 2, 3, 4 oder 5, wobei die Vorbehandlungszusammensetzung weiterhin wenigstens ein teilchenförmiges Material umfasst.

**7.** Verfahren gemäß einem der Ansprüche 4 bis 6, wobei das teilchenförmige Material ein Glas, ein Aluminat, ein Aluminiumphosphat, ein Silicat, ein Phosphat, einen Graphit, einen Ruß, ein Metalloxid, ein Metallcarbid, ein Borid oder ein Gemisch von zweien oder mehreren davon umfasst, wobei die mittlere Teilchengröße des teilchenförmigen Materials im Bereich von bis zu 300 Mikrometern liegt.

**8.** Verfahren gemäß einem der Ansprüche 4 bis 7, wobei das teilchenförmige Material Aluminiumoxidteilchen umfasst, wobei die Aluminiumoxidteilchen eine mittlere Teilchengröße im Bereich von 2 Nanometer bis 300 Mikrometer aufweisen.

**9.** Zusammensetzung, die teilchenförmige Feststoffe aus wenigstens einem Phosphatglas und wenigstens eine Trägerflüssigkeit sowie (i) wenigstens ein Ammoniumphosphat, (ii) wenigstens ein Metallphosphat, (iii) wenigstens eine feuerfeste Verbindung, (iv) wenigstens ein Netzmittel oder (v) ein Gemisch von zweien oder mehreren von (i) bis (iv) umfasst.

**10.** Zusammensetzung gemäß Anspruch 9, wobei die feuerfeste Verbindung Aluminiumorthophosphat, Borphosphat, Mangandioxid, Spinell, Aluminiumnitrid, Bornitrid, Siliciumcarbid, Borcarbid, Siliciumnitrid, Titanborid, Zirconiumborid oder ein Gemisch von zweien oder mehreren davon umfasst.

**11.** Zusammensetzung gemäß Anspruch 9 oder 10, wobei das Phosphatglas wenigstens ein Borphosphatglas umfasst.

**12.** Zusammensetzung gemäß einem der Ansprüche 9 bis 11, wobei das Metallphosphat Aluminiumorthophosphat, Monoaluminiumphosphat oder ein Gemisch davon umfasst.

**13.** Zusammensetzung gemäß einem der Ansprüche 9 bis 12, wobei das Ammoniumphosphat Ammoniumdihydrogenphosphat, Ammoniumhydrogenphosphat oder ein Gemisch davon umfasst.

## Revendications

**1.** Procédé pour l'inhibition de l'oxydation d'un composite carbone-carbone, comprenant les étapes consistant à:

(A) appliquer une composition antioxydante sur une surface du composite carbone-carbone, la composition antioxydante comprenant des solides particulaires d'au moins un verre phosphate combiné avec au moins un liquide porteur; et
(B) chauffer le composite carbone-carbone obtenu à l'étape (A) à une température suffisante pour faire adhérer le verre phosphate au composite carbone-carbone.

**2.** Procédé selon la revendication 1, dans lequel, avant l'étape (A), une composition de prétraitement est appliquée sur la surface du composite carbone-carbone, la composition de prétraitement comprenant l'acide phosphorique et/ou au moins un sel de phosphate acide, au moins un sel d'aluminium, et éventuellement au moins un sel additionnel, le composite carbone-carbone étant poreux, la composition de prétraitement pénétrant dans au moins certains des pores du composite carbone-carbone.

**3.** Procédé selon la revendication 2, dans lequel le rapport atomique du métal au phosphate pour la composition de prétraitement est compris entre 0,26 et 0,50.

**4.** Procédé selon l'une quelconque des revendications 1 à 3, dans lequel, avant l'étape (A), au moins un matériau particulaire est appliqué sur la surface du composite carbone-carbone.

**5.** Procédé selon l'une quelconque des revendications 2 ou 3, dans lequel, avant d'appliquer la composition de prétraitement sur la surface du composite carbone-carbone, au moins un matériau particulaire est appliqué sur la surface du composite carbone-carbone.

6. Procédé selon l'une quelconque des revendications 2, 3, 4 ou 5, dans lequel la composition de prétraitement comprend en outre au moins un matériau particulaire.

7. Procédé selon l'une quelconque des revendications 4 à 6, dans lequel le matériau particulaire comprend un verre, un aluminate, un phosphate d'aluminium, un silicate, un phosphate, un graphite, un noir de carbone, un oxyde métallique, un carbure métallique, un borure ou un mélange de deux ou plusieurs de ceux-ci, la taille moyenne des particules du matériau particulaire allant jusqu'à 300 micromètres.

8. Procédé selon l'une quelconque des revendications 4 à 7, dans lequel le matériau particulaire comprend des particules d'alumine, les particules d'alumine ayant une taille moyenne des particules comprise entre 2 nanomètres et 300 micromètres.

9. Composition comprenant des solides particulaires d'au moins un verre phosphate et au moins un liquide porteur; et (i) au moins un phosphate d'ammonium, (ii) au moins un phosphate métallique, (iii) au moins un composé réfractaire, (iv) au moins un agent de mouillage, ou (v) un mélange de deux ou plusieurs de (i) à (iv).

10. Composition selon la revendication 9, dans laquelle le composé réfractaire comprend l'orthophosphate d'aluminium, le phosphate de bore, le dioxyde de manganèse, le spinelle, le nitrure d'aluminium, le nitrure de bore, le carbure de silicium, le carbure de bore, le nitrure de silicium, le borure de titane, le borure de zirconium ou un mélange de deux ou plusieurs de ceux-ci.

11. Composition selon les revendications 9 ou 10, dans laquelle le verre phosphate comprend au moins un verre borophosphate.

12. Composition selon l'une quelconque des revendications 9 à 11, dans laquelle le phosphate métallique comprend l'orthophosphate d'aluminium, le phosphate de monoaluminium ou un mélange de ceux-ci.

13. Composition selon l'une quelconque des revendications 9 à 12, dans laquelle le phosphate d'ammonium comprend le dihydrogénophosphate d'ammonium, l'hydrogénophosphate d'ammonium ou un mélange de ceux-ci.

# Optical Micrographs (200x)

**Light glass overcoat applied**
(two layers)

**Heavier glass overcoat applied**
(four layers)

**Glass Barrier (solid line arrow)**
**Phosphate Undercoating (dashed line arrow)**

**FIG. 1**

EP 1 968 914 B1

# SEM micrograph of glass overcoat on C/C composite (500x)

500.0μm

EP 1 968 914 B1

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040038032 A

- US 20030143436 A